# FASCICULE DE BREVET EUROPEEN

(11) **EP 4 182 264 B1**
(45) Date de publication et mention de la délivrance du brevet: **12.06.2024**
(21) Numéro de dépôt: 21755009.4
(22) Date de dépôt: 15.07.2021
(51) Int. Cl.: C01B 13/10, B01J 20/24, A61L 2/20, C02F 1/28, C02F 1/78, C08L 1/28, C08L 1/00, C08L 3/00, C08L 5/00, C08L 5/16

(54) **PROCÉDÉ DE PRÉPARATION D'UN MATÉRIAU SOLIDE DE STOCKAGE DE L'OZONE À BASE DE GLUCIDES, LEDIT MATÉRIAU ET SES UTILISATIONS**
VERFAHREN ZUR HERSTELLUNG EINES FESTEN MATERIALS AUF GLUCIDBASIS ZUR SPEICHERUNG VON OZON, DAS MATERIAL UND VERWENDUNGEN DAVON
METHOD FOR PREPARING A SOLID MATERIAL BASED ON GLUCIDES FOR STORING OZONE, THE MATERIAL AND THE USES THEREOF

(30) Priorité: 16.07.2020 FR 2007474
(43) Date de publication de la demande: 24.05.2023
(73) Titulaire: Institut National Polytechnique de Toulouse (INPT), 31029 Toulouse Cedex 4 (FR); Ecole d'Ingénieurs de Purpan (EIP), 31076 Toulouse Cedex 3 (FR); UNIVERSITE TOULOUSE III - PAUL SABATIER, 31062 Toulouse Cedex 9 (FR); Centre National de la Recherche Scientifique (CNRS), 75016 Paris (FR); Institut national de recherche pour l'agriculture, L'alimentation et l'environnement (INRAE), 75007 Paris (FR)
(72) Inventeur: TORRE, Jean-Philippe, 31432 TOULOUSE Cedex 4 (FR); PAGES-HOMS, Marielle, 31076 TOULOUSE Cedex 3 (FR); VIOLLEAU, Frédéric, 31432 TOULOUSE Cedex 4 (FR); MANERO, Marie-Hélène, 31432 TOULOUSE Cedex 4 (FR); RICHARD, Romain, 31432 TOULOUSE Cedex 4 (FR)
(74) Mandataire: Brevalex
(86) Numéro de dépôt international: PCT/FR2021/051323
(87) Numéro de publication internationale: WO 2022/013504

(56) Documents cités:
- WO-A-2013/126047
- WO-A1-2015/131066
- WO-A2-2009/140264
- JP-A- 2007 210 881
- US-A- 4 590 265
- US-A1- 2018 178 263
- US-A1- 2019 241 452
- DETTMER ADAM ET AL: "Stabilization and prolonged reactivity of aqueous-phase ozone with cyclodextrin", CONTAMINANT HYDROLOGY, ELSEVIER, AMSTERDAM, NL, vol. 196, 5 décembre 2016 (2016-12-05), pages 1-9, XP029875084, ISSN: 0169-7722, DOI: 10.1016/J.JCONHYD.2016.11.003 cité dans la demande

## Description

### Domaine technique

La présente invention concerne le domaine technique général du stockage de l'ozone.

Plus particulièrement, la présente invention propose un procédé et une installation permettant de préparer un matériau se présentant sous forme solide et, de fait, facilement manipulable, dans lequel de l'ozone est stocké.

La présente invention concerne également ce matériau de stockage d'ozone, qui permet d'augmenter la stabilité de l'ozone et donc sa durée de vie, ainsi que l'utilisation de ce matériau à pouvoir oxydant dans toutes les applications visant à mettre à profit les propriétés de l'ozone.

### État de la technique antérieure

Du fait de son fort pouvoir oxydant, l'ozone est utilisé actuellement pour de nombreuses applications, comme, par exemple, la désinfection et le traitement de l'eau. L'utilisation d'ozone est également regardée attentivement pour des applications potentielles telles que le traitement des végétaux.

Pour autant, et même si certains sites commerciaux affichent cette possibilité de traitement, l'application de l'eau enrichie en ozone dans un milieu ouvert est peu pertinente. En effet, la gouttelette d'eau va perdre sa concentration en ozone très rapidement par phénomène de désorption et l'ozone ne pourra donc pas atteindre sa cible (la feuille si on traite une plante).

Par ailleurs, l'ozone est un gaz en conditions ambiantes qui ne peut être stocké du fait de son instabilité. Ainsi, aujourd'hui cette molécule doit être produite au besoin par un ozoneur, appareil aussi appelé « générateur d'ozone », qui produit une décharge électrique dans un flux de gaz chargé en oxygène (air, air enrichi en dioxygène (O₂) ou O₂ pur) et qui permet de créer la molécule d'ozone (O₃). L'ozone peut également être produit par d'autres procédés impliquant un plasma ou une lumière UV notamment à la longueur d'onde de 185 nm. Cette molécule d'ozone a une durée de vie limitée, de l'ordre d'une vingtaine de minutes dans l'eau en conditions ambiantes. Elle ne peut pas être stockée par exemple dans une bouteille à l'état pur ou en mélange. A noter que les risques d'explosion sont élevés lorsque le mélange envisagé est un mélange de dioxygène et d'ozone dans lequel la concentration en ozone est supérieure à 10-13% mol à pression atmosphérique et/ou lorsque ce mélange est comprimé à une pression de l'ordre de plusieurs dizaines de bars. On peut prolonger la durée de vie de l'ozone, par exemple en abaissant fortement la température (azote liquide par exemple), mais il n'existe, à l'heure actuelle, aucun système pouvant stocker de façon durable une grande quantité d'ozone.

Cette limitation de stockage pose des problèmes pour utiliser facilement ce gaz car il faut obligatoirement un ozoneur sur place et, si tel est le cas, le gaz produit doit être utilisé très rapidement. De plus, en fonction des applications visées, la nécessité d'avoir un ozoneur sur place peut être considérée comme trop chère, trop encombrante ou encore trop technique.

La très faible durée de vie de l'ozone est liée au fait que la molécule d'ozone est instable : lorsque deux molécules d'ozone se rencontrent, elles peuvent se décomposer en trois molécules de dioxygène selon la réaction 2 O₃ -> 3 O₂. Cette décomposition est favorisée par une élévation de la température et/ou la présence d'éléments catalyseurs comme certains matériaux solides, certaines molécules ou certaines conditions d'humidité. Ainsi, la durée de demi-vie de l'ozone dans l'air est théoriquement de 3 jours mais, comme ce gaz réagit avec quasiment tous les matériaux environnants, elle est en pratique de quelques secondes. Il est donc très difficile de limiter la réaction de décomposition de l'ozone, à part à de très basses températures qui favorisent un mouvement réduit des molécules. Par ailleurs, la pressurisation d'ozone conduit à augmenter son instabilité (rapprochement des molécules) et donc à réduire sa durée de vie.

Plusieurs stratégies ont déjà été proposées pour résoudre le problème technique du stockage de l'ozone.

Des recherches menées dans les années 60 ont proposé une voie théorique de stockage de l'ozone liquide, par stabilisation par du fluor, du trifluorure de chlore et de l'acide nitrique, mais ces recherches n'ont pas donné de suite, probablement en raison de la dangerosité de ces produits. Le stockage de mélange O₂/O₃ liquide sous forte pression a également été envisagé et testé mais jamais commercialisé car extrêmement dangereux. En effet, il existe des risques d'explosion si le pourcentage d'ozone liquide est trop fort et/ou si le dioxygène s'évapore et crée une atmosphère explosive. De plus, les risques de décomposition thermique de l'ozone ajoutés aux risques de décomposition au contact de solides ou molécules ont conduit les équipes de recherche impliquées à abandonner ces thématiques.

La société Air Liquide a commercialisé quelque temps un stockage d'ozone liquide plus sûr, dans du liquide cryogénique (Fréon). Mais la difficulté à séparer les deux gaz et les problèmes de décomposition de l'ozone ont définitivement mis fin à la commercialisation de ce produit.

Le stockage d'ozone dans un hydrate de gaz a également été proposé. Ce concept a été montré, pour la première fois, en 1964 par McTurk et Waller qui sont parvenus à former un hydrate mixte tétrachlorométhane (CCl₄) + O₃, en saturant une solution de CCl₄ avec de l'ozone à -2°C. Toutefois, le CCl₄ est un produit extrêmement toxique non envisageable dans nombre des applications utilisant l'ozone comme oxydant ou comme désinfectant [1]. Les hydrates mixtes contenant de l'ozone formé en mettant en contact un mélange O₂/O₃ et un gaz annexe (« help gas ») ont été étudiés essentiellement par une équipe japonaise (Ohmura et Mori) entre 2010 et 2014. Parmi les travaux publiés par cette équipe, on peut citer Nakagima *et al,* 2012 qui étudie l'équilibre de phase et la composition de l'hydrate mixte O₂/O₃ + CO₂ **[2].** Il a été montré dans ce travail qu'un mélange O₂/O₃ contenant 10-12 % mol en O₃ mélangé à du CO₂ dans un rapport molaire 1/7 formé à la pression de 19 bar et à une température de 0,1°C est stable en conditions aérées (tube ouvert à l'air) durant plus de 20 jours à -25°C et peut stocker une quantité d'ozone de 0,1 % massique.

A l'heure actuelle, l'eau ozonée et la glace ozonée peuvent être utilisées. Ainsi, la demande de brevet JP 2007/210881 au nom de Kurita Water Ind. Ltd., publiée le 23 août 2007 **[3]** propose un procédé pour préparer une glace ozonée. Mais, la concentration d'ozone dans l'eau ozonée et dans la glace ozonée reste très faible avec une durée de vie assez courte.

Afin d'augmenter la durée de vie de l'ozone dans l'eau ozonée et d'obtenir une réactivité prolongée, il a été proposé de piéger, en phase aqueuse, de l'ozone dans une cyclodextrine du type hydroxypropyl-β-cyclodextrine [4]. De même, la demande de brevet US 2018/0178263 au nom de OXYTEC LLC, publiée le 28 juin 2018 [5] propose un procédé pour réduire la contamination dans l'eau ou le sol, consistant à injecter une solution aqueuse d'un clathrate d'ozone utilisant un oligosaccharide cyclique tel qu'une cyclodextrine. Dans ces documents, la cyclodextrine est toujours mise en solution dans l'eau puis l'ozone sous forme gazeuse est injecté dans cette solution.

La demande internationale WO 2013/126047 au nom de Empire Technology Development LLC, publiée le 29 août 2013 propose un matériau pour l'emballage alimentaire comprenant des vides dans lesquels on trouve un gaz de conservation des aliments qui peut être de l'ozone [6]. Ce matériau peut se présenter sous forme d'une mousse gélifiée ou d'un polymère filmogène, tous deux pouvant contenir un polysaccharide. Lors de la préparation de ce matériau et notamment lors de la mise en contact avec le gaz de conservation, les éléments constituant la mousse gélifiée ou le polymère filmogène se présentent sous forme liquide.

Dans un aspect distinct du stockage de l'ozone, la demande de brevet US 2016/0367967 au nom de Temple University of the Commonwealth System of Higher Education, publiée le 22 décembre 2016 [7] concerne des systèmes et procédés pour régénérer un adsorbant du type β-cyclodextrine après son utilisation dans un procédé de décontamination de l'eau. Le procédé de régénération est basé sur le traitement de la β-cyclodextrine avec de l'ozone gazeux utilisé pour détruire les contaminants piégés dans la cavité de la β-cyclodextrine. L'adsorbant β-cyclodextrine utilisé peut être régénéré et réutilisé pour de nombreux cycles de traitement grâce à ce processus d'ozonation, en phase liquide.

Les inventeurs se sont fixé pour but de mettre au point un matériau facile à préparer, facile à utiliser et pouvant stocker l'ozone en grande quantité et de façon durable de façon à lever un certain nombre de verrous quant à l'utilisation pratique de ce gaz.

### Exposé de l'invention

La présente invention permet d'atteindre le but que se sont fixé les inventeurs et de résoudre tout ou partie des problèmes des procédés et matériaux de stockage de l'ozone de l'état de la technique.

En effet, les inventeurs ont mis au point un procédé permettant de produire un matériau de stockage de l'ozone se présentant sous forme solide et donc facilement manipulable et utilisable. Le procédé de préparation selon l'invention permet d'obtenir une poudre qui peut être utilisée telle quelle par saupoudrage, sous forme d'un gel par dépôt ou sous forme d'une solution, dispersion, émulsion ou suspension par dépôt ou par pulvérisation, ou encore sous forme plus compactée notamment pour en faire des pastilles.

Par ailleurs, le matériau solide de stockage préparé conformément au procédé selon l'invention permet de stocker, de façon durable, de l'ozone puisque les tests non optimisés réalisés par les inventeurs ont montré que l'ozone peut y être stocké pendant plusieurs jours à température ambiante, ce qui correspond à une amélioration significative eu égard à la demi-vie de l'ozone, à température ambiante, qui est de l'ordre de la vingtaine de minutes dans l'eau ozonée. Il s'agit donc non seulement d'un matériau de stockage de l'ozone mais aussi d'un matériau de stabilisation de l'ozone. Ce matériau offre également une grande capacité potentielle de stockage de l'ozone. Certains des matériaux décrits dans la partie expérimentale ci-après ont une capacité de stockage 400 fois supérieure, notamment 800 fois supérieure et voire même 950 fois supérieure à celle de l'eau ozonée.

Le fait que le matériau solide de stockage préparé conformément au procédé selon l'invention soit facilement manipulable tout en garantissant la stabilisation de l'ozone sur du long terme permet de dissocier le lieu de production du lieu d'utilisation voire même d'envisager un lieu de stockage distinct du lieu de production et du lieu d'utilisation. Le matériau de stockage de l'ozone selon l'invention constitue donc également un matériau de transport de l'ozone et ce, en toute sécurité.

Tous ces avantages sont obtenus en mettant en oeuvre un procédé simple, facilement industrialisable, ne nécessitant pas de conditions opératoires à risque et utilisant des matières premières du type glucide facilement accessibles et relativement bon marché. En effet, les glucides, déjà largement utilisés notamment dans les formulations cosmétiques et pharmaceutiques, constituent des produits naturels, non dangereux, éco-compatibles et se dégradant dans le milieu naturel. Les glucides correspondent à une famille de composés susceptibles de présenter des propriétés différentes notamment en termes de solubilité, hydrophilie, hydrophobie, propriétés de complexation, capacité à former des gels qui permet d'envisager la préparation d'un matériau solide de stockage de l'ozone modulable et polyvalent, adapté à des utilisations ciblées.

Plus particulièrement, la présente invention concerne un procédé de préparation d'un matériau solide de stockage de l'ozone selon la revendication 1.

Parmi les glucides utilisables dans le cadre de la présente invention, on peut citer les oses également connus sous l'appellation de « glucides simples » ou « monosaccharides » et les osides également connus sous l'appellation de « glucides complexes » correspondant à des polymères d'oses reliés par des liaisons glycosidiques alpha ou beta et parmi lesquels on trouve les oligosaccharides et les polysaccharides.

Par « dérivé de glucide », on entend un dérivé de monosaccharide, un dérivé d'oligosaccharide ou un dérivé de polysaccharide.

Par « monosaccharide », on entend un ose comprenant de 3 à 9 atomes de carbone, cet ose pouvant être de configuration L ou D. En particulier, les monosaccharides utilisables dans le cadre de la présente invention sont notamment des oses à 3 atomes de carbone (ou trioses) tels que le glycéraldéhyde et la dihydroxyacétone ; les oses à 4 atomes de carbone (ou tétroses) tels que l'érythrose, le thréose et l'érythrulose ; les oses à 5 atomes de carbone (ou (desoxy)pentoses) tels que le désoxyribose, le ribose, l'arabinose, le xylose, le lyxose, le ribulose et le xylulose ; les oses à 6 atomes de carbone (ou (desoxy)hexoses) tels que l'allose, l'altrose, le galactose, le glucose, le dextrose, le gulose, l'idose, le mannose, le talose, le fructose, le psicose, le sorbose, le tagatose, le fucose et le rhamnose ; les oses à 7 atomes de carbone (ou heptoses) tels que le sédoheptulose et le mannoheptulose ; les oses à 8 atomes de carbone (ou octoses) tels que l'heptahydroxyoctanal et les oses à 9 atomes de carbone (ou nonoses) tels que l'acide neuraminique ou acide sialique. Plus particulièrement, les monosaccharides utilisables dans le cadre de la présente invention sont choisis dans le groupe constitué par le désoxyribose, le ribose, l'arabinose, le xylose, le ribulose, le galactose, le glucose, le dextrose, le mannose, le fructose, le fucose et le rhamnose.

Par « dérivé de monosaccharide » ou « dérivé d'ose », on entend un ose tel que précédemment défini dans lequel au moins un atome d'hydrogène et/ou au moins un radical hydroxyle et/ou la fonction carbonyle d'un ose tel que précédemment défini est substitué(e) par un atome d'halogène ou un groupement chimique tel qu'un groupement alkyle, un groupement hydroxyalkyle, un groupement thioalkyle, groupement sulfhydryle, un groupement acétyle, un groupement silyle, un groupement acyle, un groupement sulfonyle, un groupement amine, un groupement sulfoalkyléther, un groupement sulfate, un groupement phosphate, un groupement carboxyle, un groupement carboxylester, un groupement ammonium quaternaire, un groupement glucosyle, un groupement maltosyle, un groupement chlorotriazinyle ou un groupement ammonium quaternaire. A titre d'exemples particuliers de dérivés de monosaccharides utilisables dans le cadre de la présente invention, on peut citer l'acide gluconique, l'acide glucuronique, l'acide mannuronique, l'acide guluronique, l'acide galacturonique, l'acide iduronique, l'acide ascorbique (ou acide oxo-3-gulofuranolactone), la glucosamine, la N-acétylglucosamine, l'acide N-acétylmannuronique, le sucralose, l'érythritol, le xylitol, l'arabitol (ou lyxitol), le ribitol (ou adonitol), le sorbitol (ou gulitol), le dulcitol (ou galactitol), le mannitol et le volemitol.

Par « oligosaccharide », on entend un polymère d'oses et/ou de dérivés d'oses, identiques ou différents, comprenant chacun de 3 à 9 atomes de carbone et notamment de 5 à 9 atomes de carbone dans lequel le nombre d'oses est déterminé et supérieur ou égal à deux. Parmi les oligosaccharides utilisables dans le cadre de la présente invention, on peut citer les disaccharides (ou diholosides), les trisaccharides (ou triholosides), les tétrasaccharides (ou tétraholosides), et les oligosaccharides à 5 ou plus oses.

Par « disaccharide », on entend un composé formé par deux oses identiques ou différents, deux dérivés d'oses, identiques ou différents, ou un ose et un dérivé d'ose, comprenant chacun de 3 à 9 atomes de carbone et notamment de 5 à 9 atomes de carbone. Parmi les disaccharides utilisables dans le cadre de la présente invention, on peut citer les disaccharides réducteurs tels que le lactose, le maltose, le cellobiose et l'isomaltose et les disaccharides non réducteurs tels que le saccharose (ou sucrose) et le tréhalose. Plus particulièrement, les disaccharides utilisables dans le cadre de la présente invention sont choisis parmi les disaccharides réducteurs et notamment dans le groupe constitué par le lactose, le maltose, la cellobiose et l'isomaltose.

Par « trisaccharide », on entend un composé formé par trois oses identiques ou différents, trois dérivés d'oses, identiques ou différents, deux oses, identiques ou différents, et un dérivé d'ose ou encore un ose et deux dérivés d'oses, identiques ou différents, comprenant chacun de 3 à 9 atomes de carbone et notamment de 5 à 9 atomes de carbone. Parmi les trisaccharides utilisables dans le cadre de la présente invention, on peut citer l'acarbose, l'erlose (ou glucosylsucrose), le fucosyllactose, le lactosucrose, l'isokestose, l'isomaltotriose, l'inulotriose, le β-glucotriose, le kestose, le maltotriose, le nigerotriose, le panose, le raffinose, le rhamninose, le raffinose, le theanderose, le mélézitose et le gentianose.

Par « tétrasaccharide », on entend un composé formé par quatre oses, identiques ou différents, quatre dérivés d'oses, identiques ou différents, un ose et trois dérivés d'oses, identiques ou différents, deux oses, identiques ou différents, et deux dérivés d'oses, identiques ou différents, ou encore trois oses, identiques ou différents, et un dérivé d'ose, comprenant chacun comprenant chacun de 3 à 9 atomes de carbone et notamment de 5 à 9 atomes de carbone. Parmi les tétrasaccharides utilisables dans le cadre de la présente invention, on peut citer le lychnose (ou 1-α-galactosyl-raffinose), le maltotétraose, le nigerotétraose, le nystose, le sésamose et le stachyose.

Par « oligosaccharide à 5 ou plus oses », on entend un polymère d'oses et/ou de dérivés d'oses, identiques ou différents, comprenant, chacun, de 3 à 9 atomes de carbone et notamment de 5 à 9 atomes de carbone dans lequel le nombre total d'oses et de dérivés d'ose est déterminé et supérieur ou égal à cinq. Un tel oligosaccharide peut être linéaire, ramifié ou cyclique. Un exemple particulier d'oligosaccharides à 5 ou plus oses est une cyclodextrine.

A noter que, dans le cadre de la présente invention, si les glucides mis en oeuvre sont des cyclodextrines et/ou des dérivés de cyclodextrine, ces derniers doivent être utilisés en mélange avec au moins un autre glucide différent d'une cyclodextrine ou d'un de ses dérivés.

En variante, toutefois, les glucides mis en oeuvre peuvent être des cyclodextrines et/ou des dérivés de cyclodextrines sans mélange avec un quelconque autre glucide ou dérivé de glucide. Dans ce cas, les glucides et/ou dérivés de glucides mis en oeuvre dans la présente invention peuvent être l'un quelconque des glucides et/ou dérivés de glucides ou mélange de glucides et/ou dérivés de glucides tels que décrits dans la présente.

Par « cyclodextrine » on entend un oligosaccharide cyclique de formule (C₆H₁₀O₅)ₙ composé de n sous-unités de glucopyranose de formule C₆H₁₀O₅ liées en α-(1,4) avec n représentant un nombre entier. Les termes « cyclodextrine », « cycloamylose », « cycloglucane », « cyclomaltooside » et « dextrine de Schardinger » sont équivalents et utilisables de façon interchangeable.

Les cyclodextrines mises en oeuvre en mélange avec un autre glucide dans le cadre de l'invention présentent une structure annulaire, formant une cage en forme de cône tronqué délimitant une cavité dont la taille est dépendante du nombre n de sous-unités de glucopyranose et qui peut stabiliser d'autres molécules, où n est avantageusement compris entre 6 et 35.

A titre d'exemples particuliers de cyclodextrines utilisables en mélange avec un autre glucide dans le cadre de la présente invention, on peut citer les cyclomaltohexaoses, cyclohexaamylose, α-cycloamylases ou α-cyclodextrines (α-CD) dans lesquelles n représente 6, les cyclomaltoheptaoses ou β-cyclodextrines (β-CD) dans lesquelles n représente 7 et les cyclomaltooctaoses ou γ-cyclodextrines (y-CD) dans lesquelles n représente 8, les cyclomaltononaoses dans lesquelles n est égal à 9, les cyclomaltoheneicosaoses dans lesquelles n est égal à 21, les cyclomaltodoicosaoses dans lesquelles n est égal à 22 et les cyclomaltohentricontaoses dans lesquelles n est égal à 31.

Par « dérivé de cyclodextrine », on entend une cyclodextrine telle que précédemment définie, modifiée chimiquement, réticulée, immobilisée et/ou organisée en superstructure moléculaire. Quelle que soit la variante envisagée, un dérivé de cyclodextrine mis en oeuvre en mélange avec un autre glucide dans l'invention présente toujours une cavité apte à stabiliser d'autres molécules.

Un dérivé du type cyclodextrine modifiée chimiquement est obtenu en substituant au moins un atome d'hydrogène et/ou au moins un radical hydroxyle d'une cyclodextrine telle que précédemment définie par un atome ou un groupement chimique tel qu'un atome d'halogène, un groupement alkyle, un groupement hydroxyalkyle, un groupement thioalkyle, groupement sulfhydryle, un groupement acétyle, un groupement silyle, un groupement acyle, un groupement sulfonyle, un groupement amine, un groupement sulfoalkyléther, un groupement sulfate, un groupement phosphate, un groupement carboxyle, un groupement carboxylester, un groupement ammonium quaternaire, un groupement glucosyle, un groupement maltosyle, un groupement chlorotriazinyle ou un groupement ammonium quaternaire. En fonction de la nature chimique du ou des groupement(s) substituant(s) mis en oeuvre, le dérivé de cyclodextrine peut être ionique ou amphiphile.

A titre d'exemples illustratifs et non limitatifs de dérivés du type cyclodextrine modifiée chimiquement, on peut citer une α-CD, une β-CD ou une γ-CD méthylée de façon aléatoire ; une méthyl-α-CD ; une méthyl-β-CD ; une méthyl-γ-CD ; la heptakis(2,3,6-tri-*O*-methyl)-β-CD ; une α-CD, une β-CD ou une γ-CD faiblement méthylée en position 2 (2-O-méthylée) ; une α-CD, une β-CD ou une γ-CD diméthylée ; une α-CD, une β-CD ou une γ-CD perméthylée ; une α-CD, une β-CD ou une γ-CD perpentylée ; une α-CD, une β-CD ou une γ-CD acétylée ; une α-CD, une β-CD ou une γ-CD peracétylée ; une α-CD, une β-CD ou une γ-CD hydroxypropylée ; une α-CD, une β-CD ou une γ-CD hydroxyéthylée ; une α-CD, une β-CD ou une γ-CD sulfatée ; une α-CD, une β-CD ou une γ-CD phosphatée ; une α-CD, une β-CD ou une γ-CD carboxyméthylée ; une α-CD, une β-CD ou une γ-CD carboxyméthyléthérée ; une 3-triméthylammonium-2-hydroxypropyl-éther-α-CD ; une 3-triméthylammonium-2-hydroxypropyl-éther-β-CD ; une 3-triméthylammonium-2-hydroxypropyl-éther-γ-CD ; la mono-(6-mercapto-6-déoxy)-β-CD ; la mono-(6-amino-6-déoxy)-β-CD ; la heptakis(6-amino-6-déoxy)-β-CD ; la mono-(6-(diéthylènetriamine)-6-déoxy)-β-CD ; la hexakis-(6-iodo-6-déoxy)-α-CD ; une sulfobutyléther-α-CD ; une sulfobutyléther-β-CD ; une sulfobutyléther-γ-CD; la 3-triméthylammonium-2-hydroxylpropyléther-α-CD ; la 3-triméthylammonium-2-hydroxylpropyléther-β-CD ; la 3-triméthylammonium-2-hydroxylpropyléther-γ-CD ; la glucosyl-α-CD ; la glucosyl-β-CD ; la glucosyl-γ-CD ; la maltosyl-α-CD ; la maltosyl-β-CD ; la maltosyl-γ-CD ; la chlorotriazinyl-α-CD ; la chlorotriazinyl-β-CD ; et la chlorotriazinyl-γ-CD.

Un dérivé du type cyclodextrine réticulée est typiquement obtenu en formant des liaisons entre des cyclodextrines ou des cyclodextrines chimiquement modifiées telles que précédemment définies grâce à un agent réticulant tel que l'épichlorhydrine, le 1,4-butanedioldiglycidyléther, le 1,2-epoxypropane, le 1,3-diglycidylglycérol, le 1,4-phényldiisocyanate, le 2,4-toluène diisocyanate, la glutaraldéhyde ou l'acide citrique. Un dérivé du type cyclodextrine réticulée se présente sous forme d'un polymère soluble ou insoluble tel que des gels ou hydrogels réticulés. Ainsi, les polymères de cyclodextrines sont des exemples de dérivés de cyclodextrine réticulés. Ce type de dérivé peut être préparé en deux étapes avec, tout d'abord, une réticulation des molécules de CD par l'épichlorhydrine en présence d'un autre agent réticulant cationique puis une carboxyméthylation des particules réticulées en surface. A titre d'exemple particulier, on peut citer un gel amphotère de cyclodextrines réticulées par l'épichlorohydrine en présence de 3-chlorure-2-hydroxypropyl triméthylammonium, et carboxyméthylé [8].

Un dérivé du type cyclodextrine immobilisée correspond à des cyclodextrines ou des cyclodextrines modifiées chimiquement telles que précédemment définies, greffées sur des polymères comme des polyalkylamines, des polyéthylènes imines, des polyallylamines ou des polyacrylates; sur des membranes comme des membranes liquides supportées ou des membranes denses ; sur des textiles ; sur des billes inorganiques comme des billes de silice ou de charbon actif ; ou sur des résines organiques.

A titre d'exemples illustratifs et non limitatifs de dérivés du type cyclodextrine immobilisée, on peut citer les membranes de poly(acétate de vinyle)-β-CD réticulé avec du di-époxyde, les membranes mixtes polysiloxane-β-CD sur membrane céramique, les membranes de poly(acétate de vinyle)-α-CD réticulé avec de l'hexaméthylène diisocyantate, les β-CD fixées sur des fibres de polyacrilonitrile ou de polyester, des CD greffées sur du chitosan, des monochlorotriazinyl-β-CD fixées sur des fibres de coton, de coton/polyuréthane ou de coton/polyamide et des fibres de laine, de cellulose ou de poly(téréphtalate d'éthylène) traitées avec le système β-CD/acide 1,2,3,4-butanetétracarboxylique.

A titre d'exemples de dérivés du type cyclodextrine organisée en superstructure moléculaire, on peut citer les polyrotaxanes, les polypseudorotaxanes constitués d'une chaîne de poly(éthylène glycol) constituant le stator complexé par plusieurs cyclodextrines constituant la partie mobile ou rotor et les tubes moléculaires.

Les glucides mis en oeuvre dans le cadre de la présente invention peuvent également être des polysaccharides.

Par « polysaccharide », on entend un polymère d'oses, identiques ou différents, et/ou de dérivés d'oses, identiques ou différents, comprenant chacun de 3 à 9 atomes de carbone et notamment de 5 à 9 atomes de carbone dans lequel le nombre d'oses et/ou de dérivés d'oses est indéterminé et typiquement supérieur à 10 et notamment supérieur à 20.

Parmi les polysaccharides utilisables dans le cadre de la présente invention, on distingue les polysaccharides constitués du même ose ou du même dérivé d'ose i.e. des polymères d'oses identiques ou de dérivés d'oses identiques également désignés sous les appellations « homopolysaccharides » ou « homoglycanes » et les polysaccharides formés d'oses et de dérivés d'oses, de différents oses et/ou de différents dérivés d'oses i.e. des polymères d'oses et de dérivés d'oses, de différents oses et/ou de différents dérivés d'oses également désignés sous les appellations « hétéropolysaccharides » ou « hétéroglycanes ».

Parmi les homopolysaccharides utilisables dans le cadre de la présente invention, on peut citer les fructanes ; les glucanes (ou dextranes) ; les galactanes telles que l'agar-agar et les carraghénanes ; les xylanes ; les mannanes ; les amyloses ; les amylopectines ; les celluloses ; les chitines ; les amidons et les glycogènes.

Parmi les hétéropolysaccharides utilisables dans le cadre de la présente invention, on peut citer les hémicelluloses, la gomme arabique, la gomme de guar, les alginates, les xanthanes, les chitosans, les acides hyaluroniques et les xyloglucanes.

Par ailleurs, selon l'architecture de leur chaîne, les polysaccharides peuvent être (i) linéaires comme, par exemple, les celluloses ou les amyloses ; (ii) ramifiés comme, par exemple, les amylopectines, les dextranes ou les hémicelluloses ou encore (iii) mixtes comme les amidons et les glycogènes.

Par « dérivé d'oligosaccharide ou de polysaccharide », on entend un oligosaccharide ou polysaccharide tel que précédemment défini dans lequel au moins un atome d'hydrogène et/ou au moins un radical hydroxyle et/ou au moins une fonction carbonyle est substitué(e) par un atome d'halogène ou un groupement chimique tel qu'un un groupement alkyle, un groupement hydroxyalkyle, un groupement thioalkyle, groupement sulfhydryle, un groupement acétyle, un groupement silyle, un groupement acyle, un groupement sulfonyle, un groupement amine, un groupement sulfoalkyléther, un groupement sulfate, un groupement phosphate, un groupement carboxyle, un groupement carboxylester, un groupement ammonium quaternaire, un groupement glucosyle, un groupement maltosyle, un groupement chlorotriazinyle ou un groupement ammonium quaternaire.

A titre d'exemples particuliers de dérivés d'oligosaccharides ou de polysaccharides utilisables dans le cadre de la présente invention, on peut citer le maltitol, l'isomaltitol, le lactitol ainsi que des oligosaccharides et des polysaccharides tels que précédemment définis, substitués par au moins un groupement hydroxyalkyle et notamment par au moins un groupement hydroxypropyle.

A titre d'exemples plus particuliers de dérivés d'oligosaccharides ou de polysaccharides utilisables dans le cadre de la présente invention, on peut citer les hydroxypropylcelluloses ; les hydroxypropylméthylcelluloses ; les hydroxypropylfructanes ; les hydroxypropylglucanes (ou hydroxypropyldextranes) ; les hydroxypropylgalactanes telles que l'agar-agar substitué par au moins un groupement hydroxypropyle et les carraghénanes substitués par au moins un groupement hydroxypropyle ; les hydroxypropylxylanes ; les hydroxypropylmannanes ; les hydroxypropylamyloses ; les hydroxypropylamylopectines ; les hydroxypropylchitines ; les hydroxypropylamidons ; les hydroxypropylglycogènes ; les hydroxypropylhémicelluloses ; la gomme arabique substituée par au moins un groupement hydroxypropyle ; la gomme de guar substituée par au moins un groupement hydroxypropyle; les hydroxypropylalginates ; les hydroxypropylxanthanes ; les hydroxypropylchitosans ; les acides hyaluroniques substitués par au moins un groupement hydroxypropyle et les hydroxypropylxyloglucanes.

Dans un mode de réalisation particulier, les glucides et/ou les dérivés de glucides mis en oeuvre dans le cadre de la présente invention sont des oligosaccharides, des dérivés d'oligosaccharides, des polysaccharides et/ou des dérivés de polysaccharides.

Avantageusement, lorsque le dérivé d'oligosaccharide est un dérivé de cellulose, ce dernier est une cellulose dans laquelle au moins un atome d'hydrogène et/ou au moins un radical hydroxyle et/ou au moins une fonction carbonyle est substitué(e) par un atome ou un groupement chimique tel qu'un atome d'halogène, un groupement alkyle, un groupement hydroxyalkyle, un groupement thioalkyle, groupement sulfhydryle, un groupement acétyle, un groupement silyle, un groupement acyle, un groupement sulfonyle, un groupement amine, un groupement sulfoalkyléther, un groupement sulfate, un groupement phosphate, un groupement carboxyle, un groupement ammonium quaternaire, un groupement glucosyle, un groupement maltosyle, un groupement chlorotriazinyle ou un groupement ammonium quaternaire.

Selon l'invention, les glucides et/ou les dérivés de glucides mis en oeuvre dans le cadre de la présente invention sont différents d'esters de cellulose.

Le procédé selon la présente invention envisage de mettre en oeuvre (i) un ensemble de glucides identiques ou différents appartenant à une même famille ou à des familles différentes choisie(s) parmi les monosaccharides, les oligosaccharides et les polysaccharides tels que précédemment définis, (ii) un ensemble de dérivés de glucides identiques ou différents appartenant à une même famille ou à des familles différentes choisie(s) parmi les dérivés de monosaccharides, les dérivés d'oligosaccharides et les dérivés de polysaccharides tels que précédemment définis, ou encore (iii) un ensemble de glucides, identiques ou différents appartenant à une même famille ou à des familles différentes choisie(s) parmi les monosaccharides, les oligosaccharides et les polysaccharides tels que précédemment définis et de dérivés de glucides, identiques ou différents appartenant à une même famille ou à des familles différentes choisie(s) parmi les dérivés de monosaccharides, les dérivés d'oligosaccharides et les dérivés de polysaccharides tels que précédemment définis. De plus, dans les variantes (i) à (iii) ci-dessus, les glucides et/ou les dérivés de glucides mis en oeuvre peuvent être utilisés en mélange avec des cyclodextrines et/ou des dérivés de cyclodextrine tels que précédemment définis.

Les glucides et/ou les dérivés de glucides mis en oeuvre dans le cadre de l'invention se présentent sous forme solide granulaire, plus ou moins à l'état de poudre. Ainsi, les glucides et/ou les dérivés de glucides mis en oeuvre dans le cadre de l'invention se présentent sous forme solide granulaire, éventuellement poreuse. La granulométrie du solide dépend du type de glucides mis en oeuvre. Typiquement, le diamètre moyen des grains de glucides et/ou des dérivés de glucides est compris entre 10 nm et 10 mm et notamment entre 10 µm et 5 mm.

Les glucides et/ou les dérivés de glucides mis en oeuvre dans le cadre de l'invention peuvent également se présenter sous forme solide compacte notamment sous forme de bloc solide ou d'assemblage de plusieurs blocs solides. Cette forme solide compacte peut éventuellement être poreuse.

A l'état natif i.e. soit après leur production naturelle, soit après leur synthèse chimique, les glucides et/ou les dérivés de glucides solides mis en oeuvre dans le cadre de l'invention peuvent être stabilisés par une ou plusieurs molécule(s) d'eau adsorbée(s) à leur surface et/ou présente(s) dans leur cavité, dans le cas de cyclodextrines ou de dérivés de cyclodextrines. Avantageusement, lors de la mise en contact avec le gaz comprenant de l'ozone, les glucides et/ou les dérivés de glucides mis en oeuvre dans le cadre de l'invention sont exempts de toute molécule différente d'une molécule d'eau et susceptible de réagir avec l'ozone.

Par ailleurs, le procédé selon la présente invention peut présenter une étape préalable à la mise en contact entre les glucides et/ou les dérivés de glucides et le gaz comprenant de l'ozone visant à éliminer tout ou partie des molécules d'eau associées aux glucides. A titre d'exemples, un tel traitement peut être un traitement thermique ou une extraction sous vide. En variante, le procédé selon la présente invention peut présenter une étape préalable à la mise en contact entre les glucides et/ou les dérivés de glucides et le gaz comprenant de l'ozone visant à remplacer tout ou partie des molécules d'eau absorbées à la surface des glucides et/ou des dérivés de glucides et/ou présentes dans les cavités des glucides et/ou des dérivés de glucides, lorsqu'ils en présentent, par une substance non réactive à l'ozone comme du dioxyde de carbone. A titre d'exemple, un tel traitement peut consister à mettre en contact les glucides et/ou les dérivés de glucides avec du CO₂ sous pression.

Avantageusement, le gaz comprenant de l'ozone mis en oeuvre dans le cadre de la présente invention est un mélange gazeux comprenant de l'ozone et au moins un autre gaz tel que du dioxygène, du dioxyde de carbone, du diazote ou un de leurs mélanges. Lorsque le mélange gazeux comprend de l'ozone et du dioxygène, ce mélange est produit à partir d'un générateur d'ozone ou ozoneur, typiquement alimenté avec de l'air ambiant, de l'air sec, de l'air humide, de l'air compressé ou de l'oxygène pur. La concentration en ozone dans le mélange gazeux en sortie du générateur d'ozone est comprise entre 10 g/Nm³ et 180 g/Nm³. La production d'ozone dans un tel générateur d'ozone ou ozoneur peut impliquer une décharge électrique, un plasma ou une lumière UV notamment à la longueur d'onde de 185 nm.

Typiquement, dans le procédé selon l'invention, la mise en contact entre les glucides et le gaz comprenant de l'ozone est réalisée à une température comprise entre 0°C et 80°C, notamment entre 5°C et 70°C, en particulier, entre 10°C et 60°C, plus particulièrement entre 15°C et 55°C et, plus particulièrement encore, entre 15°C et 40°C. Ainsi, cette mise en contact peut être réalisée à température ambiante. Par « température ambiante », on entend toute température comprise entre 18°C et 28°C.

Typiquement, dans le procédé selon l'invention, la mise en contact entre les glucides et/ou les dérivés de glucides et le gaz comprenant de l'ozone dure entre 1 min et 8 h, notamment entre 15 min et 6 h et, en particulier, entre 30 min et 4 h. Plus particulièrement, cette mise en contact peut durer, par exemple, de l'ordre de 1 h (i.e. 1 h ± 15 min), de l'ordre de 2 h (i.e. 2 h ± 15 min) ou de l'ordre de 3 h (i.e. 3 h ± 15 min).

Par ailleurs, la mise en contact entre les glucides et/ou les dérivés de glucides et le gaz comprenant de l'ozone se fait en absence de tout liquide comme, par exemple, de la glycérine.

Dans le procédé selon l'invention, la mise en contact entre les glucides et/ou les dérivés de glucides et le gaz comprenant de l'ozone peut être réalisée en présence d'un composé solide inerte. Par « composé solide inerte », on entend un composé solide qui ne stocke pas l'ozone et qui ne réagit ni avec les glucides et/ou dérivés de glucides, ni avec le gaz comprenant de l'ozone. Un tel composé solide inerte peut être, par exemple, du quartz, du mica, de la silice naturelle, de la silice pyrogénée, de la silice précipitée, du feldspath, de la stéatite, de la craie, du noir de carbone, du sulfate de barium, de la ferrite de barium, de l'alumine (Al₂O₃), du sable, du talc, du kaolin, de l'oxyde de titane, du carbonate de calcium, du carbonate de magnésium, du bicarbonate de sodium, duphosphate de calcium ou un de leurs mélanges. L'ajout d'un composé solide inerte aux glucides et/ou les dérivés de glucides dans le réacteur peut permettre avantageusement de faire varier la concentration en ozone dans le matériau solide de stockage d'ozone en faisant varier le ratio [composé solide inerte]/[glucides et/ou les dérivés de glucides].

Dans le procédé selon l'invention, la mise en contact entre les glucides et/ou les dérivés de glucides et le gaz comprenant de l'ozone peut être réalisée dans tout système permettant une réaction dite « gaz/solide », i.e. dans un appareil ou dispositif permettant de mettre efficacement en contact un gaz avec un solide. Considérant la phase solide correspondant, dans le procédé selon l'invention, aux glucides et/ou aux dérivés de glucides sous forme solide, la mise en contact peut être discontinue, semi-continue ou continue.

Dans un procédé discontinu (ou batch), le solide est chargé dans un contacteur gaz/solide, opérant en lit fixe ou fluidisé.

Dans un procédé semi-continu (semi-batch), plusieurs contacteurs opèrent simultanément soit en lit fixe, soit en lit fluidisé. Par un jeu de vannes, il est possible de charger ou décharger un appareil dans lequel la réaction est terminée pendant qu'un autre est en réaction. De cette façon on peut simuler un procédé continu.

Dans un procédé continu fluidisé, le solide peut être expansé dans le contacteur ou peut circuler à contre-courant du flux de gaz réactif. La réaction a lieu lorsque le gaz rencontre les particules solides en mouvement ou non. On peut avoir des lits mobiles, ou des lits fluidisés multi-étages avec recirculation du solide entre les étages.

Dans un lit fixe, les particules solides sont placées dans un réacteur ayant un fond poreux (appelé « distributeur ») capable de laisser passer au travers de ce fond le gaz comprenant de l'ozone de bas en haut tout en retenant les particules placées au-dessus de ce fond. Le lit est dit « fixe » car il ne bouge pas (les solides restent immobiles) l'écoulement du gaz se faisant dans l'espace interstitiel laissé libre entre les particules fixes. Le débit de gaz est, dans ce cas, volontairement faible pour ne pas mettre en mouvement les particules.

Dans un lit fluidisé, le débit de gaz utilisé est plus élevé que dans un procédé à lit fixe. La vitesse de gaz entre les particules solides augmente, et par suite, le frottement du gaz sur la surface des particules augmente également. Lorsque le frottement du gaz crée une force suffisante pour compenser le poids de toutes les particules du lit, on dit que le lit de particules est fluidisé. La vitesse du gaz à partir de laquelle le lit est fluidisé est appelée « vitesse minimale de fluidisation ». Une fois ce passage de l'état de lit fixe au lit fluidisé réalisé par le maintien du passage de gaz au débit ad hoc, la couche de particules fluidisées se comporte comme un liquide où, par exemple, des objets plus légers peuvent flotter à sa surface et où des objets plus lourds peuvent couler.

Dans un lit mobile, le débit de gaz utilisé est encore supérieur à celui utilisé précédemment. Ainsi, les particules peuvent s'écarter les unes des autres laissant plus d'espace libre entre elles et des bulles de gaz peuvent apparaître. Des particules solides peuvent être entraînées par le gaz et quitter le réacteur. La solution envisagée est généralement la mise en place d'un cyclone après le réacteur qui permet de séparer le gaz et les particules solides par force centrifuge. Le solide peut alors être collecté et réinjecté dans le bas du réacteur jusqu'à atteindre le temps de réaction désiré.

Dans le procédé selon l'invention, la mise en contact entre les glucides ou les dérivés de glucides et le gaz comprenant de l'ozone peut être également réalisée dans des contacteurs tels que des mélangeurs de poudres ou des réacteurs agités. Ces mélangeurs peuvent être regroupés en plusieurs catégories: les cuves tournantes (enceintes fermées mises en rotation), les mélangeurs convectifs (constitués d'une cuve ou enceinte fixe et d'une partie mécanique mobile (agitateur, ruban) à l'intérieur de cette cuve), les mélangeurs à fort cisaillement (cuve statique dans laquelle tourne un agitateur à grande vitesse), les mélangeurs statiques (circulation de la poudre dans une enceinte contenant des internes), les mélangeurs à lits fluidisés (circulation d'un gaz au sein du lit de poudre permettant de la mettre en mouvement au sein de l'appareil), et les appareils constitués d'une combinaison de plusieurs mélangeurs. Ces appareils peuvent fonctionner en mode continu ou discontinu (batch). On peut citer par exemple, pour les mélangeurs discontinus, les mélangeurs dits à vis conique, à pales, à vis à ruban, à socs, birotor à palettes, verticaux, hybrides, etc. Pour les mélangeurs continus, on peut citer par exemple les mélangeurs à fort impact, modulaires, ou rapides à pales.

Comme expliqué ci-dessus, l'homme du métier saura adapter, sans effort inventif, le débit du gaz lors de la mise en contact entre les glucides sous forme solide et le gaz comprenant de l'ozone en fonction des dispositifs ou installations choisi(e)s pour cette mise en contact. Typiquement, le débit de gaz en sortie de la source de gaz comprenant de l'ozone et notamment en sortie de l'ozoneur est compris entre 15 L/h et 1 m³/h.

De la même façon, l'homme du métier saura choisir, sans effort inventif, la quantité de glucides et/ou de dérivés de glucides sous forme solide à utiliser en fonction des dispositifs ou installations choisi(e)s pour cette mise en contact.

Le procédé selon la présente invention peut comprendre une étape supplémentaire consistant à récupérer les glucides et/ou les dérivés de glucides suite à leur mise en contact avec le gaz comprenant de l'ozone. Cette récupération peut consister à décharger les glucides et/ou les dérivés de glucides du réacteur tel que précédemment défini dans lequel la mise en contact a eu lieu.

Le matériau obtenu ou récupéré à l'issue du procédé selon l'invention a la même apparence visuelle que les glucides et/ou les dérivés de glucides mis en oeuvre lors du procédé. Il se présente donc sous forme solide, pouvant aller de la poudre à un bloc solide ou de bloc solide, dont le diamètre moyen des grains est typiquement compris entre 10 nm et 10 mm et notamment entre 10 µm et 5 mm, ou sous forme solide compacte.

Par contre, le matériau obtenu ou récupéré se distingue, chimiquement, du matériau de départ correspondant aux glucides et/ou aux dérivés de glucides mis en oeuvre lors du procédé i.e. les glucides et/ou les dérivés de glucides n'ayant pas été mis en contact avec le gaz contenant de l'ozone. En effet, le matériau obtenu ou récupéré est positif au test découlant du dosage à l'iodure de potassium/thiosulfate, contrairement au matériau de départ. Le matériau obtenu ou récupéré présente aussi des propriétés oxydantes et biocides nettes, que ne possède pas le matériau de départ. De plus, le matériau obtenu ou récupéré libère de l'ozone lors de tests réalisés avec un détecteur d'ozone dans un récipient fermé (tests réalisés à sec ou en solution et à température ambiante ou au-delà, en fonction du glucide ou dérivé de glucide mis en oeuvre). En effet, la concentration en ozone augmente, au cours du temps, dans le récipient contenant ce matériau obtenu ou récupéré, alors qu'aucune libération d'ozone n'est observée avec le matériau de départ.

Ces différents éléments associés au fait que le matériau obtenu ou récupéré perde une partie de son activité oxydante dans le temps constituent des preuves que le matériau obtenu ou récupéré contient de l'ozone. En d'autres termes, suite à leur mise en contact avec un gaz comprenant de l'ozone, au moins une partie des glucides et/ou des dérivés de glucides se présentant sous forme solide contient de l'ozone, ce dernier pouvant se trouver sous forme moléculaire, ionique et/ou radicalaire. Le matériau obtenu ou récupéré constitue donc bien un matériau solide de stockage d'ozone.

Par « stockage de l'ozone », on entend, dans le cadre de la présente invention, un stockage physique et/ou chimique de l'ozone. Un stockage physique de l'ozone est un stockage sans modification chimique de l'ozone telle que dissolution, adsorption, complexation, liaison faible (liaison hydrogène, liaison de van der Walls) .... Un stockage chimique de l'ozone est un stockage impliquant des liaisons chimiques (chimisorption) ou une réaction chimique, comme, par exemple, une réaction chimique entre l'ozone et les glucides et/ou les dérivés de glucides. Ainsi, suite à leur mise en contact avec un gaz comprenant de l'ozone, les glucides et/ou les dérivés de glucides se présentant sous forme solide contiennent par exemple de l'ozone (stockage physique) et/ou de l'ozone (stockage chimique) stabilisé par réaction avec les glucides et/ou les dérivés de glucides, ou éventuellement par réaction avec des molécules d'eau et/ou avec d'autres espèces présentes dans le gaz comprenant de l'ozone.

La présente invention concerne également une installation susceptible d'être mise en oeuvre dans le cadre du procédé de préparation tel que précédemment défini. Cette installation comprend au moins un réacteur contenant des glucides et/ou des dérivés de glucides sous forme solide tel(le)s que précédemment défini(e)s en connexion fluidique avec une source d'un gaz comprenant de l'ozone.

Le réacteur de l'installation selon l'invention est notamment un contacteur gaz/solide, opérant en lit fixe ou fluidisé, un mélangeur de poudre ou un réacteur agité et ce, dans toutes les variantes précédemment décrites.

Lorsque le gaz comprenant de l'ozone est un mélange comprenant de l'oxygène et de l'ozone, la source est un générateur d'ozone. Là aussi, toutes les informations précédemment fournies pour caractériser un tel générateur d'ozone s'appliquent également à l'installation selon l'invention.

Avantageusement, l'installation selon l'invention comprend, en outre, un ou plusieurs élément(s) choisi(s) dans le groupe constitué par un filtre, un destructeur d'ozone, un débitmètre, des sondes de température, des analyseurs d'ozone et des vannes. En particulier, l'installation selon l'invention comprend l'ensemble de ces éléments. La partie expérimentale ci-après décrit une forme de mise en oeuvre particulière d'une installation selon la présente invention.

La présente invention concerne également un matériau solide de stockage de l'ozone susceptible d'être préparé par un procédé de préparation tel que précédemment défini. Typiquement, le matériau solide de stockage de l'ozone objet de la présente invention comprend des glucides et/ou des dérivés de glucides se présentant sous forme solide, contenant de l'ozone (stockage physique) et/ou de l'ozone (stockage chimique) stabilisé par réaction avec les glucides et/ou les dérivés de glucides, ou éventuellement par réaction avec des molécules d'eau et/ou avec d'autres espèces présentes dans le gaz comprenant de l'ozone. Dans une forme de mise en oeuvre particulière, le matériau solide de stockage de l'ozone objet de la présente invention est constitué de glucides et/ou de dérivés de glucides se présentant sous forme solide, contenant de l'ozone (stockage physique) et/ou de l'ozone (stockage chimique) stabilisé par réaction avec les glucides et/ou les dérivés de glucides, ou éventuellement par réaction avec des molécules d'eau et/ou avec d'autres espèces présentes dans le gaz comprenant de l'ozone.

Tout ce qui a été précédemment décrit en rapport avec les glucides, les dérivés de glucide, le matériau obtenu ou récupéré s'applique également à cet aspect de l'invention.

Avantageusement, le matériau solide de stockage de l'ozone selon l'invention se présente sous forme compactée et/ou sous forme conditionnée.

Lorsque le matériau solide de stockage de l'ozone selon l'invention est sous forme compactée, il peut se présenter sous forme de granulés, d'une pastille et/ou d'une briquette.

Lorsque le matériau solide de stockage de l'ozone selon l'invention, compacté ou non, est sous forme conditionnée, il est disposé dans un contenant tel qu'un sachet, un tube, une boîte, un flacon, une colonne, une capsule ou une gélule. Ce contenant peut être éventuellement fermé hermétiquement. Ce contenant peut éventuellement être le réacteur dans lequel a eu lieu la mise en contact.

Que le matériau solide de stockage de l'ozone selon l'invention soit sous forme compactée et/ou sous forme conditionnée, il peut être conservé à une température comprise entre -80°C et 50°Cet notamment entre -80°C et 40°C et ce, sous vide, sous air ambiant, sous air humide, sous air sec, sous dioxyde de carbone, sous gaz inerte comme de l'argon, de l'azote ou un de leurs mélanges.

La présente invention concerne enfin l'utilisation d'un matériau solide de stockage de l'ozone tel que précédemment défini ou d'un matériau solide de stockage de l'ozone susceptible d'être préparé par un procédé de préparation tel que précédemment défini comme agent désinfectant (notamment éliminant les virus), dépolluant, nettoyant ou biocide (notamment fongicide, bactéricide ou herbicide). L'activité du matériau solide selon l'invention en tant qu'agent désinfectant, dépolluant, nettoyant ou biocide est générée par l'ozone stocké, sous forme physique et/ou chimique, dans ce matériau.

En d'autres termes, la présente invention concerne un procédé pour désinfecter, dépolluer ou nettoyer un fluide ou une surface, consistant à mettre en contact ce fluide ou cette surface avec un matériau solide de stockage de l'ozone tel que précédemment défini ou un matériau solide de stockage de l'ozone susceptible d'être préparé par un procédé de préparation tel que précédemment défini.

Par « désinfecter, dépolluer ou nettoyer un fluide ou une surface », on entend dans le cadre de la présente invention diminuer la quantité ou l'activité d'agents biologiques ou composés chimiques présents dans le fluide ou sur la surface avant la mise en contact avec le matériau solide de stockage de l'ozone selon l'invention. Cette diminution de quantité peut impliquer l'élimination ou la destruction de ces agents ou composés et/ou leur transformation en éléments moins nocifs.

Tout fluide susceptible d'être contaminé par un ou plusieurs agent(s) biologique(s) ou un ou plusieurs composé(s) chimique(s) peut être soumis à un procédé de désinfection, de dépollution ou de nettoyage selon la présente invention. Par « fluide », on entend aussi bien un gaz ou un liquide. Plus particulièrement, un tel fluide peut être choisi parmi l'air ambiant ou l'atmosphère gazeuse d'un site tel qu'une pièce domestique, une chambre froide ou un espace confiné industriel ; de l'eau de ville, de rivière, de puits, de nappe phréatique, d'étang, de lac, de piscine, d'un aquarium, de refroidissement des systèmes de climatisation ou de tours aéro-réfrigérées ; un prélèvement dans un réacteur chimique ; une eau usée domestique ; un produit notamment liquide, un effluent ou de l'eau usée provenant notamment d'élevages intensifs ou d'industries ou d'installations du domaine chimique, pharmaceutique, cosmétique, agricole, agroalimentaire, maritime, aéronautique ou spatial ; ou un de leurs mélanges. A noter que, lorsque le fluide est de l'air ambiant ou une atmosphère gazeuse, le matériau solide de stockage de l'ozone tel que précédemment défini ou le matériau solide de stockage de l'ozone susceptible d'être préparé par un procédé de préparation tel que précédemment défini permet de traiter ces derniers en le dépolluant, en le désinfectant et/ou en éliminant les odeurs.

Toute surface susceptible d'être contaminée par un ou plusieurs agent(s) biologique(s) ou un ou plusieurs composé(s) chimique(s) peut être soumise à un procédé de désinfection, de dépollution ou de nettoyage selon la présente invention. Avantageusement, dans le cadre de la présente invention, la surface à désinfecter, à dépolluer ou à nettoyer peut être une surface inorganique et notamment une surface en métal comme en aluminium, en alliage métallique, en acier et notamment en acier inoxydable, en fer-blanc, en silicium, en verre contenant généralement des silicates, en verre de silice, en céramique, en brique, en porcelaine, en ciment, en béton, en asphalte, en pierre, en granit, en plastique ou en une quelconque de leurs associations. Plus particulièrement, une telle surface peut être choisie parmi des installations de grande taille comme un objet industriel comme un appareil électronique ou une machine utilisée dans l'agro-alimentaire, un véhicule, une carcasse, un aéronef, une cuve, une cuisine de restaurant, une chambre froide, un sanitaire, un conteneur, une partie d'une habitation comme un toit, une façade, une terrasse, une allée ; et des installations de petite taille comme des système embarqués dans l'espace, dans des bateaux ou dans des sous-marins, des dispositifs médicaux ou des tuyaux. Il peut également s'agir d'une surface organique comme un sol ou de la terre, du bois ou une surface végétale. Par « surface végétale », on entend une plante, une partie de plante comme les feuilles, les tiges, les racines, les fruits ou les graines, ou un ensemble de plantes.

Par « agent biologique », on entend aussi bien les micro-organismes naturels tels que bactéries, archées, parasites, protozoaires, champignons, levures ou virus, les toxines produites ou non par de tels micro-organismes, les agents pathogènes de nature protéique comme les prions et les micro-organismes génétiquement modifiés que les végétaux comme les plantes ou les mousses ou les parties de végétaux comme les graines, les fruits, les feuilles, les tiges ou les racines.

Eu égard à ce qui précède, il est clair que des végétaux ou parties de végétaux peuvent être, dans certaines applications, la surface à traiter. Dans ce cas, le matériau solide de stockage de l'ozone tel que précédemment défini ou le matériau solide de stockage de l'ozone susceptible d'être préparé par un procédé de préparation tel que précédemment défini sert à éliminer les micro-organismes comme les champignons ou les bactéries présents sur ces végétaux ou parties de ces végétaux ou à limiter l'activité de ces végétaux. Dans d'autres applications, les végétaux ou parties de végétaux constituent l'agent biologique à éliminer et le matériau solide de stockage de l'ozone tel que précédemment défini ou le matériau solide de stockage de l'ozone susceptible d'être préparé par un procédé de préparation tel que précédemment défini devient un agent herbicide. L'homme du métier saura déterminer sans effort inventif et au besoin à l'aide de tests de routine, la quantité de matériau à utiliser en fonction de l'application visée.

Par « composé chimique », on entend un composé non souhaité comme un polluant ou un contaminant susceptible d'être présent ou présent dans un fluide ou sur une surface. A titre d'exemples illustratifs et non limitatifs, le composé peut être choisi parmi le dioxyde d'azote (NO₂), le monoxyde de carbone (CO), le dioxyde de soufre (SO₂), l'acroléine, un phénol, un insecticide, un pesticide, un composé soufré tel que du sulfure d'hydrogène (H₂S), un thiol ou un mercaptan, un hydrocarbure saturé ou insaturé tel qu'un alcène ou un hydrocarbure aromatique polycyclique, un composé organique volatil tel que un adhéhyde, du formaldéhyde, de l'acétaldéhyde, du naphtalène, une amine primaire notamment aromatique, de l'indole, du scatole, du tryptophane, de l'urobilinogène, du pyrrole, du benzène, l'éthylbenzène, du toluène, un xylène, du styrène, du napthalène, un composé halogéné, une toxine, un peptide, une protéine, une glycoprotéine, un composé pharmaceutique, un dérivé pharmaceutique ou un de leurs mélanges.

La mise en contact entre le fluide ou la surface et le matériau solide de stockage de l'ozone selon l'invention peut être mise en oeuvre de différentes façons et notamment en fonction de la nature gazeuse ou liquide du fluide. Ainsi, on peut introduire le matériau solide de stockage de l'ozone dans le fluide liquide, déposer ou appliquer le matériau solide de stockage de l'ozone sur la surface, mettre le matériau stockage de l'ozone en présence du fluide gazeux (expositions statiques) ou faire circuler le fluide notamment gazeux sur le matériau solide de stockage de l'ozone (exposition dynamique). Le matériau solide de stockage de l'ozone selon l'invention peut être dissout dans un solvant avant d'être mis en contact avec le fluide ou la surface. Le solvant sera choisi en fonction des propriétés du matériau natif et/ou de celles du matériau solide de stockage de l'ozone selon l'invention (solubilité, stabilité en solution).

Dans certaines de ces variantes, il pourra ainsi être avantageux d'utiliser des solvants aqueux ou organiques, des solutions de sels métalliques et/ou organiques, des liquides ioniques ou des fluides supercritiques. Un tel solvant peut ainsi être choisi parmi l'eau, un alcool comme, par exemple, éthanol ou méthanol, un éther, une huile comme une huile végétale, une cire comme, par exemple, une cire blanche, de la lanoléine ou de la cire de carnauba, un hydrocarbure et silicone comme, par exemple, une huile de vaseline, une paraffine ou une huile de silicone, le cadmium éthylènediamine (Cadoxen), l'hydroxyde de cupraammonium (Cuam), l'hydroxyde de cupriéthylènediamine (Cuen), le N,N-diméthylacétamide (DMAc), la 1,3-diméthyl-2-imidazolidinone (DMI), la diméthylformamide (DMF), le diméthylsulfoxide (DMSO), la N-méthylmorpholine N-oxide (NMMO), des solutions organiques comprenant un sel de chlorure de lithium (LiCI), un polyéthylène glycol (PEG) et un de leurs mélanges.

Dans d'autres de ces variantes, il peut être avantageux de conditionner le matériau solide de stockage de l'ozone selon l'invention notamment sous forme de colonne dans laquelle le matériau selon l'invention correspond à un lit fluidisé dont le fluide liquide ou gazeux assure la fluidisation.

Dans le cas où le matériau solide de stockage de l'ozone selon l'invention est appliqué sur une surface, cette application peut se faire par saupoudrage du matériau solide, par dépôt d'un gel contenant le matériau ou par dépôt ou pulvérisation d'une solution, d'une dispersion, d'une émulsion, d'une micro-émulsion ou d'une suspension contenant le matériau.

Dans le cas où le matériau est introduit dans le fluide liquide, il peut être avantageux d'agiter le mélange ainsi obtenu.

Dans un mode de réalisation particulier, le procédé pour désinfecter, dépolluer ou nettoyer un fluide ou une surface selon l'invention, comprend les étapes consistant à :
- préparer un matériau solide de stockage de l'ozone selon le procédé de préparation tel que précédemment défini ;
- éventuellement récupérer le matériau solide de stockage de l'ozone ainsi préparé puis
- mettre en contact ce fluide ou cette surface avec un matériau solide de stockage de l'ozone ainsi préparé ou éventuellement ainsi récupéré.

Dans ce mode de réalisation particulier, il est possible de mettre en contact le matériau solide de stockage de l'ozone avec le fluide ou avec la surface tout de suite après sa préparation ou sa récupération. En variante, une fois préparé et avant la mise en contact, le matériau solide de stockage de l'ozone peut être conservé ou stocké. Typiquement, cette conservation ou stockage peut être réalisé(e) à une température comprise entre -80°C et 50°Cet notamment entre -80°C et 40°C et ce, sous vide, sous air ambiant, sous air humide, sous air sec, sous dioxyde de carbone ou sous gaz inerte comme de l'argon, de l'azote ou un de leurs mélanges.

La présente invention concerne aussi un matériau solide de stockage de l'ozone tel que précédemment défini ou un matériau solide de stockage de l'ozone susceptible d'être préparé par un procédé de préparation tel que précédemment défini pour utilisation comme médicament. En effet, du fait des propriétés biostatiques et/ou biocides de ce matériau, on peut envisager de l'utiliser pour le traitement ou la prévention de pathologies ou troubles provoqués par un micro-organisme tel que précédemment défini. En particulier, ces pathologies ou ces troubles sont des pathologies ou troubles cutanés. A titre d'exemples illustratifs de telles pathologies ou de tels troubles, on peut citer un impétigo, une lymphangite, un furoncle, un abcès, un anthrax, une mycose, une verrue, un eczéma, une dermatite séborrhéique, un zona et un herpès. Par « médicament », on entend aussi bien un médicament à usage humain qu'un médicament à usage vétérinaire.

La présente invention concerne aussi l'utilisation d'un matériau solide de stockage de l'ozone tel que précédemment défini ou d'un matériau solide de stockage de l'ozone susceptible d'être préparé par un procédé de préparation tel que précédemment défini comme un réactif chimique. En effet, ce matériau peut être utilisé comme agent oxydant lors d'une réaction chimique et/ou pour fournir l'ozone durant une réaction chimique en nécessitant.

D'autres caractéristiques et avantages de la présente invention apparaîtront encore à l'homme du métier à la lecture des exemples ci-dessous donnés à titre illustratif et non limitatif, en référence aux figures annexées.

### Brève description des figures

La Figure 1 présente un schéma d'une installation susceptible d'être mise en oeuvre dans le cadre de la présente invention avec 1. Ozoneur; 2. Réacteur; 3. Bain thermostaté ; 4. Pompe à vide ; 5. Filtre ; 6. Destructeur; F1, F2. Débitmètres ; T1. Sonde de température ; P1, P2. Capteurs de pression ; A1. Analyseur d'ozone ; V1, V2, V3, V4, V5, V6, V7, V8, V9, V10, V11. Vannes.
La Figure 2A présente les résultats des tests biologiques dans les conditions détaillées au point II.3 et dans le Tableau 3 (comptage des unités formant des colonies (UFC) des boîtes avec milieu gélosé en fonction du matériau testé et de la bactérie mise en contact).
La Figure 2B présente les résultats des tests biologiques dans les conditions détaillées au point II.3 et dans le Tableau 3 (photographies des boîtes avec milieu gélosé en fonction du matériau testé et de la bactérie mise en contact).
La Figure 3 présente l'évolution de la concentration d'ozone, dans les matériaux A et B selon l'invention, au cours du temps pour un stockage au congélateur à -20°C.
La Figure 4 présente les résultats des tests Indigo.

### Exposé détaillé des modes de réalisation particuliers

### I. Installation et procédé de préparation du matériau selon l'invention.

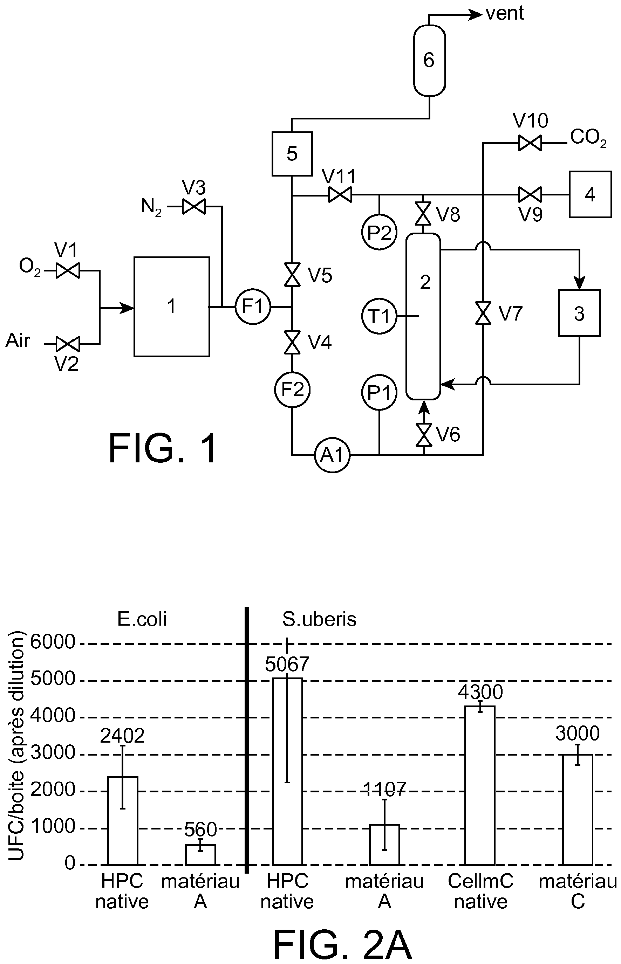

Un exemple particulier d'installation mise en oeuvre pour préparer un matériau à activité oxydative selon l'invention est décrit Figure 1.

Cette installation se compose d'un ozoneur (1), un réacteur (2), un bain thermostaté (3), une pompe à vide (4), un filtre (5) et un destructeur d'ozone (6). Les vannes (V1) et (V2) permettent de choisir le gaz d'alimentation de l'ozoneur (oxygène ou air). Les vannes (V3) et (V10) permettent de faire circuler de l'azote ou du CO₂ dans le procédé, si besoin. La vanne (V4) permet de diriger le gaz venant de l'ozoneur vers le réacteur (2). La vanne (V5) dirige le gaz vers le destructeur (5). Les vannes (V6) et (V8) permettent d'isoler le réacteur (2), et la vanne (V7) d'ouvrir le bypass du réacteur (2). La vanne (V9) permet de connecter la pompe à vide (4) au procédé, et la vanne (V11) permet de fermer le circuit de purge du réacteur (2) pour la mise sous vide de l'installation. Les paramètres du procédé sont suivis à l'aide de différents capteurs qui sont reliés, pour certains, à un système d'acquisition et à un ordinateur: un débitmètre volumique (rotamètre à bille (F1)) placé en sortie d'ozoneur permettant de régler les débits de gaz d'alimentation du réacteur (2), un débitmètre massique (F2) pour mesurer précisément le débit d'alimentation du réacteur (2), un analyseur d'ozone (A1) pour mesurer la concentration en ozone du gaz d'alimentation du réacteur (2), deux capteurs de pression (P1) et (P2) permettant de mesurer la pression en amont et en aval du réacteur (2), et une sonde de température (T1) permettant de mesurer la température au sein du réacteur (2).

La synthèse du matériau d'intérêt se fait par réaction directe gaz/solide entre les glucides ou les dérivés de glucides et un mélange gazeux contenant de l'ozone (O₃). Les glucides et les dérivés de glucides utilisés dans la partie expérimentale en lien avec cette installation sont l'hydroxypropyl cellulose (HPC, fournie par Sigma-Aldrich, lot S12E055), la cellulose microcristalline (CellmC, fournie par Accros Organics, lot A0411090) et la gomme xanthane (XAN, fournie par Sigma-Aldrich, lot SLBZ5317).

Le réacteur (2) utilisé est entièrement un inox. C'est un réacteur tubulaire de 17 mm de diamètre, 150 mm de longueur totale et 50 mm de longueur utile. Il est muni d'une double enveloppe en inox où circule un fluide caloporteur circulant dans des tuyaux flexibles. Ces tuyaux sont connectés au bain thermostaté (3) qui assure la mise en température et la circulation du fluide caloporteur dans la double enveloppe du réacteur. Le réacteur est monté en position verticale, avec une alimentation en gaz en partie basse, et est connecté au reste du procédé par des raccords double bague en inox.

Le matériau avant réaction, constitué par les glucides ou dérivés de glucides natifs, est initialement chargé manuellement dans le réacteur (2). Le solide sous forme de poudre est maintenu dans le réacteur via deux frittés positionnés en amont et en aval de la poudre.

La pompe à vide (4) permet de mettre le réacteur et une partie de l'installation sous vide, lorsque nécessaire.

Le filtre (5) permet d'éviter l'entraînement de fines particules dans le destructeur.

Le destructeur d'ozone (6) est un destructeur thermo-catalytique. Au contact de du catalyseur et sous l'effet de la température, les molécules d'ozone sont décomposées sous forme de molécules de dioxygène avant d'être rejetées dans l'atmosphère (vent).

Pour la phase de démarrage, les vannes sont initialement positionnées de telle façon que le gaz sortant de l'ozoneur soit dirigé vers le destructeur d'ozone en passant par le bypass du réacteur: vannes (V5), (V6) et (V8) fermées, et vanne (V7) ouverte.

L'ozone gazeux est généré par un ozoneur (1) (modèle CFS-01-2G de chez Ozonia). Il utilise un procédé de décharge diélectrique à partir d'air sec ou d'oxygène. La production d'ozone est réglée directement sur l'ozoneur par une valeur de puissance. Le gaz produit en sortie d'ozoneur est soit un mélange O₂/O₃ lorsque de l'oxygène pur est utilisé comme gaz d'alimentation de l'ozoneur, soit un mélange N₂/O₂/O₃ si de l'air est utilisé à la place de l'oxygène pur. Le débit de ce gaz en sortie d'ozoneur est réglé et mesuré en utilisant d'abord le rotamètre (F1) puis le débitmètre (F2). La concentration d'ozone est mesurée grâce à l'analyseur (A1).

La puissance de l'ozoneur est augmentée jusqu'à atteindre la concentration d'ozone désirée dans le gaz. Lors de cette phase transitoire, le flux gazeux ne passe pas dans le réacteur. Lors des expériences réalisées avec cette installation, la concentration d'ozone peut être très élevée, par exemple égale à 165 g O₃/Nm³.

La température dans le réacteur est régulée par le bain thermostaté (3). La plage de température des expériences réalisées avec cette installation se situe entre 7 et 77°C, la température étant adaptée pour que le matériau natif ne soit pas dégradé au cours du procédé (température inférieure à la température de fusion du matériau par exemple).

Une fois que la concentration d'ozone sur l'analyseur (A1) et la température (T1) sont stables et conformes aux valeurs désirées, le gaz sortant de l'ozoneur est dirigé vers le réacteur en fermant la vanne (V7) et en ouvrant les vannes (V6) et (V8). Dans les expériences réalisées, le débit de gaz peut être variable, et a varié de 33 à 723 Normaux litres par heure (NI/h) avec les débitmètres (F1) et (F2). La durée de mise en contact de la poudre avec le gaz contenant de l'ozone peut également être variable, pouvant aller de 0,5 à 6 h pour ces expériences.

Lorsque le temps de réaction souhaité est atteint, les vannes sont positionnées de telle façon que le gaz sortant de l'ozoneur soit dirigé vers le destructeur. Le réacteur est alors démonté du support, les frittés sont enlevés.

Le matériau obtenu en fin de synthèse est une fine poudre, ressemblant, à l'œil nu, au matériau préalablement au procédé selon l'invention.

La poudre traitée à l'ozone est alors récupérée et stockée dans un flacon en verre, ou mise en forme (sous forme de pastille par exemple).

### II. Caractérisation du matériau selon la présente invention.

### II.1. Caractérisations et dosages.

Des tests de caractérisation et des dosages (dosage à l'iodure de potassium/thiosulfate de sodium - méthode de dosage appelée « méthode au KI » ou « test au KI » - permettant de déterminer la quantité d'ozone contenue dans la poudre) ont été effectués sur certains des matériaux (à température ambiante ou avec chauffage).

A noter que la dissolution des glucides ou dérivés de glucides, natifs (produit commercial) dans une solution de KI ne produit aucune coloration de la solution (test KI négatif). Uniquement les glucides ou dérivés de glucides ayant réagi à l'ozone obtenus selon le procédé de l'invention ont un test au KI dit « positif » : la solution devient jaune/orange.

### II.2. Protocole des tests biologiques

Les tests microbiologiques ont pour objectif de vérifier l'effet biocide du matériau selon la présente invention et ainsi d'évaluer son potentiel pour un usage dans la protection des cultures par exemple.

Deux espèces ont été testées : *Escherichia coli* et *Streptococcus uberis (E.coli* et *S.uberis).* Les bactéries, qui étaient jusqu'alors stockées dans du lait glycérolé à -80°C, ont été déposées dans un milieu BCC (Bouillon Coeur Cervelle) liquide, préalablement autoclavé 15 min à 121°C. Dans le but de les sortir de la phase de latence et de leur permettre d'atteindre la phase exponentielle de croissance, les bactéries ont subi une préculture respectivement de 4h et 4h30 à 37°C sous une agitation de 150 rpm.

Les souches ont ensuite été mises en contact avec les matériaux selon l'invention, natifs ou ozonés. Les suspensions ainsi obtenues ont subi un temps d'incubation de 20 minutes à 4°C. Ces suspensions sont ensuite diluées puis déposées sur milieu gélosé (3 répétitions/modalité et dilution). Après un temps d'incubation de 24 heures à 37°C, le dénombrement est réalisé afin de comparer les différentes modalités.

### II.3. Résultats

Des tests ont été effectués afin d'évaluer : (i) l'effet du type de glucides ou dérivés de glucides (HPC, CellmC et XAN) ; (ii) l'efficacité du matériau (tests biologiques selon le protocole du point II.2. ci-dessus) ; (iii) la quantité d'ozone contenue dans le matériau ; (iv) la stabilité du matériau.

### 11.3.1. Synthèse de matériaux selon l'invention

Les synthèses ont été réalisées avec l'hydroxypropyl cellulose (HPC), la cellulose microcristalline (CellmC) et la gomme xanthane (XAN) selon le procédé décrit ci-dessus (point I.). Les produits natifs ont été utilisés sans aucun traitement préalable.

Les conditions opératoires de ces synthèses sont résumées dans le Tableau 1 ci-dessous. Les notations sont : Tr (température de réacteur) ; [O3]_{g} alim : concentration d'ozone dans le gaz d'alimentation; Q = débit de gaz; tₛ = temps de synthèse ; m = masse de poudre introduite dans le réacteur.

**Tableau 1 : Conditions opératoires des synthèses**

| REF matériau selon invention | Tr | | [O3]_{g} alim | | Q | | ts | m | Produit natif |
|---|---|---|---|---|---|---|---|---|---|
| | Moy | σ | Moy | σ | Moy | σ | | | |
| | °*C* | | *g*/*Nm³* | | *NL*/*h* | | *h* | *g* | |
| A | 25,3 | 0,3 | 80 | 2 | 172 | 3 | 2 | 2 | **HPC** |
| B | 50,6 | 0,6 | 80 | 1 | 173 | 3 | 2 | 2 | **HPC** |
| C | 25,1 | 0,1 | 82 | 1 | 176 | 3 | 2 | 5 | **CELLmC** |
| D | 25,6 | 0,1 | 77 | 1 | 170 | 3 | 2 | 6 | **HPC** |
| E | 25 | 0,3 | 75 | 1 | 169 | 3 | 2 | 6,2 | **XAN** |

### 11.3.2. Validation du caractère oxydant et concentration d'ozone de matériaux selon l'invention

Les matériaux A, B, C, D et E selon l'invention synthétisés conformément au Tableau 1 ci-dessus ont été testés. Les résultats sont résumés dans le Tableau 2 ci-après. Les notations sont [O3]ₚ = quantité d'ozone stockée obtenue par dosage volumétrique au Kl.

**Tableau 2 : Tests et dosages au KI**

| REF matériau selon l'invention | Produit natif | Test KI | **[O3]_{P}** | |
|---|---|---|---|---|
| | | | Moy | σ |
| | | | mg*_{O3}*/g*_{produit}* | |
| A | **HPC** | positif | 13,4 | 0,8 |
| B | **HPC** | positif | 10,2 | 0,7 |
| C | **CELLmC** | positif | 0,8 | 0,3 |
| D | **HPC** | positif | 12,2 | 0,7 |
| E | **XAN** | positif | 0,9 | 0,3 |

Les matériaux ozonés A, B et D se dissolvent plus difficilement dans l'eau que le produit natif, et produisent une solution visqueuse après dissolution. Un gel peut être obtenu si la concentration de poudre ozonée est importante. Le matériau C est difficilement soluble dans l'eau à température ambiante. Le matériau E est soluble dans l'eau et donne un gel très visqueux.

A conditions opératoire identiques, on note que la capacité de stockage d'ozone est dépendante de la nature du glucide ou dérivé de glucide utilisé pour la synthèse, les meilleurs résultats étant obtenus avec l'HPC (matériaux A/B/D). Par ailleurs, pour l'HPC, on notera que l'augmentation de la température de synthèse de 25°C (matériaux A et D) à 50°C (matériau B) réduit légèrement la teneur en ozone dans le matériau final.

### II.3.3. Evaluation du caractère biocide de matériaux selon l'invention sur plusieurs souches bactériennes

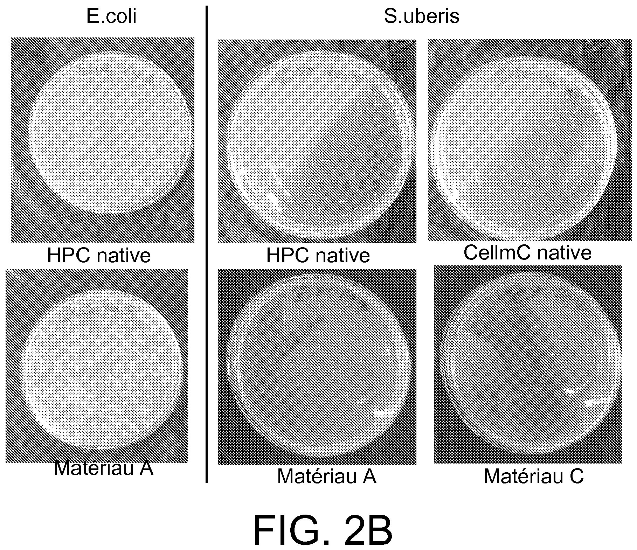

Les résultats sont résumés dans le Tableau 3 ci-après ainsi qu'aux Figures 2A et 2B.

**Tableau 3 : Caractère biocide du matériau selon l'invention**

| Matériau selon l'invention | Pathogènes | | Efficacité biologique |
|---|---|---|---|
| **A** | Bactéries | *E.coli* | Avérée *(développement limité)* |
| **C** | | *S. uberis* | |

Les résultats montrent que l'HPC selon l'invention (matériau A) permet de limiter le développement des deux souches bactériennes par rapport à ce même matériau natif. Cet effet est moindre mais également retrouvé pour la CellmC (matériau C) comparativement à la CellmC native.

L'addition de glucides ou dérivés de glucides préparés selon le procédé de l'invention limite dans les deux cas le développement des bactéries alors que les témoins (matériaux natifs) continuent leur croissance pendant les heures d'analyse. Les matériaux nouvellement obtenus ont donc un effet bactéricide.

### II.3.4. Stabilité du matériau selon la présente invention

La stabilité du matériau selon la présente invention a été testée pour les matériaux A et B obtenus selon le procédé du point 11.3.1. Le lot de poudre en fin de synthèse a été stocké à -20°C.

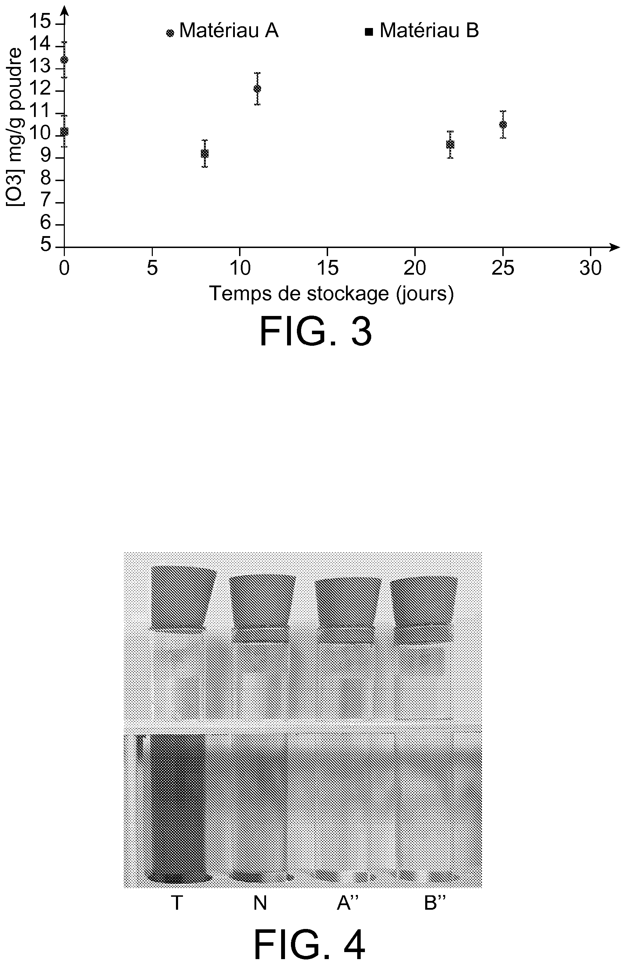

L'évolution de la teneur en ozone de ces deux matériaux stockés en flacon fermé au congélateur (-20°C) a été mesurée. Les résultats sont donnés dans le Tableau 4 et sur la Figure 3.

**Tableau 4 : Données relatives aux tests de stabilité**

| **Matériau selon l'invention** | **Durée de stockage à-20°C** | **[O3]p** | | **Perte en ozone** |
|---|---|---|---|---|
| | | Moy | σ | |
| | *i* | mg*_{O3}*/g*_{produit}* | | *%* |
| **A** | 0 | 13,4 | 0,8 | n.a. |
| **A'** | 11 | 12,1 | 0,7 | -10 |
| **A"** | 25 | 10,5 | 0,6 | -22 |
| **B** | 0 | 10,2 | 0,7 | n.a. |
| **B'** | 8 | 3,2 | 0,6 | -10 |
| **B"** | 22 | 9,6 | 0, 5 | -6 |

Sur les deux essais réalisés, on peut conclure que le matériau est relativement stable dans le temps lorsqu'il est conservé à -20°C. Il conserve ses propriétés oxydantes, avec un maximum de perte moyenne en teneur d'ozone de 22%. Cette perte peut être estimée à moins de 12% en 25 jours compte tenu des incertitudes.

En complément, un test à l'indigo, connu pour être spécifique à l'ozone, a été réalisé avec les produits stockés pendant 25 jours (A") et 22 jours (B"). Cette méthode de dosage est basée sur la détermination d'une différence de couleur : quand l'ozone réagit avec l'indigo trisulfonate (initialement de couleur bleu intense), la solution se décolore. La différence d'intensité de la couleur est inversement proportionnelle à la quantité d'ozone contenue dans le matériau. Ce test est dit « positif » pour un matériau ozoné lorsque, pour un temps donné, la décoloration d'une solution d'indigo mise en contact avec le matériau ozoné décolore plus rapidement que lorsque la même solution d'indigo est mise en contact avec le matériau natif non ozoné.

Une solution d'indigo à 8×10⁻⁶ mol/L est mise en contact à 20°C avec 150 mg de poudre de A" dans un premier tube à essai et avec 150 mg de poudre de B" dans un second tube à essai. Les tubes sont bouchés, agités et laissés au repos pendant 24h.

La Figure 4 montre les résultats des tests Indigo. Sur cette figure, les notations sont : T : solution indigo témoin 8×10⁻⁶ mol/L; N : solution indigo avec 150 mg de HPC native ; A" : solution indigo + 150 mg de poudre ozonée A stockée 25 jours à -20°C ; B" : solution indigo + 150 mg de poudre ozonée B stockée 22 jours à -20°C. La photographie est prise 24 h après la mise en contact des poudres avec la solution d'indigo.

Après 24 h de mise en contact, on note que l'HPC native (non ozonée) décolore partiellement la solution d'indigo, puisque la couleur bleue est de teinte plus claire que le témoin.

Dans le même temps, l'HPC ozonée (A" et B") décolore totalement la solution d'indigo ce qui confirme que le test indigo est positif, démontrant ainsi la présence d'ozone dans ces matériaux selon l'invention.

Ce test est une preuve supplémentaire qui démontre que de l'ozone est bien présente dans les matériaux A et B, même après plus de 20 jours de stockage à -20°C.

### II.3.5. Stockage de l'ozone par le matériau selon la présente invention

Afin de confirmer le stockage d'ozone dans le matériau selon l'invention, un test complémentaire a été réalisé avec le matériau A décrit au point 11.3.2 ci-dessus.

Lors des expérimentations, environ 1g de matériau de stockage d'ozone selon l'invention sous forme de poudre a été placé dans une coupelle en verre, elle-même placée dans un réacteur en verre de volume 1,4 litre. Le réacteur peut être fermé hermétiquement et a été maintenu à température ambiante (~20°C).

Un détecteur portatif d'ozone (modèle X-an-5000 de chez Dräger, équipé d'une cellule XXS O₃ spécifique pour la détection d'ozone, limite de détection égale à 0,02 ppm et résolution égale à 0,01 ppm, temps de réponse < 10 s à 20°C) a été introduit dans le réacteur et allumé à proximité de la coupelle de poudre. Le détecteur ainsi placé permet de mettre en évidence en continu la présence d'ozone dans le réacteur, à partir d'une concentration d'ozone supérieure à la limite de détection de 0,02 ppm.

Le détecteur détecte la présence d'ozone sans ajout d'eau nécessaire. Sur de la poudre du matériau A testée immédiatement après synthèse ou après stockage 24 h au congélateur, la concentration d'ozone mesurée est élevée (plusieurs ppm). Sur de la poudre du matériau A stockée 22 jours au congélateur à -20°C, la concentration d'ozone mesurée est plus faible mais significativement différente de 0 (concentration de l'ordre de 0,07 ppm ; valeur égale à plus du double de la valeur limite de détection (0,02 ppm) augmentée de la résolution du détecteur (0,01 ppm), soit 0,03 ppm au total).

Lors d'une autre expérience réalisée dans exactement les mêmes conditions, aucun dégagement d'ozone n'a été observé sur le détecteur lorsque du produit natif (c'est-à-dire HPC non ozonée) a été utilisé.

Ces expériences confirment donc que le matériau fabriqué selon la présente invention stocke bien de l'ozone, et que de l'ozone sous forme gazeuse peut être libérée par ce matériau.

### II.4. Conclusions.

La mise en contact de l'ozone avec les glucides ou dérivés de glucides, comme l'HPC, la CellmC et le XAN en phase solide conduit à l'obtention d'un matériau ayant des propriétés oxydatives puissantes. Les synthèses sont reproductibles ainsi que les résultats obtenus (dosages, efficacité biologique, etc.). Le produit obtenu en fin de synthèse est une poudre fine facilement utilisable pour les applications visées.

En faisant l'hypothèse que des molécules d'ozone sont stabilisées au sein du matériau, les concentrations d'ozone obtenues par dosage sont très élevées. Cette concentration dépend de plusieurs paramètres, dont la nature et les propriétés des glucides ou des dérivés de glucides.

La capacité de stockage du matériau dépend fortement du glucide ou dérivé de glucide, utilisé comme matière première. Les meilleurs résultats ont été obtenus avec l'HPC pour laquelle il a été trouvé une concentration d'ozone égale à 13400 ± 800 µg/g de poudre (trois dosages effectués). Ces valeurs équivalent à une concentration environ 950 fois plus forte que pour de l'eau ozonée à température et pression ambiantes ([O₃] eau ozonée, 25°C, 1 bar, à 60-80 g/Nm³ (pH = 7) environ 14 mg/L d'eau).

Il a également été montré que le matériau maintient ses propriétés oxydatives durant plusieurs dizaines de jours. Les mesures réalisées avec des poudres stockées à basse température de conservation (-20°C) montrent qu'il est possible par ce moyen de stockage de limiter la perte d'ozone au cours du temps.

### Références

[1] McTurk & Waller, 1964, « Ozone carbon tetrachloride double hydrate », Nature, vol. 202, page 1107.
[2] Nakagima et al, 2012, « Molecular storage of ozone in a clathrate hydrate: an attempt for preserving ozone at high concentrations », PlosOne, vol. 7: e48563.
[3] Demande de brevet JP 2007/210881 au nom de Kurita Water Ind. Ltd., publiée le 23 août 2007.
[4] Dettmer et al, 2017, « Stabilization and prolonged reactivity of aqueous-phase ozone wuth cyclodextrin », Journal of Contaminant Hydrology, vol. 196, pages 1-9.
[5] Demande de brevet US 2018/0178263 au nom de OXYTEC LLC, publiée le 28 juin 2018.
[6] Demande internationale WO 2013/126047 au nom de Empire Technology Development LLC, publiée le 29 août 2013.
[7] Demande de brevet US 2016/0367967 au nom de Temple University of the Commonwealth System of Higher Education, publiée le 22 décembre 2016.
[8] Demande internationale WO 2006/134299 au nom de l'Université de Franche-Comté, publiée le 21 décembre 2006.

## Revendications

1. Procédé de préparation d'un matériau solide de stockage de l'ozone comprenant la mise en contact de glucides et/ou de dérivés de glucides se présentant sous forme solide granulaire, éventuellement poreuse ou sous forme solide compacte, éventuellement poreuse avec un gaz comprenant de l'ozone,
à condition que, lorsque lesdits glucides et/ou lesdits dérivés de glucides comprennent des cyclodextrines ou dérivés de cyclodextrines, ces derniers sont mélangés avec au moins un autre glucide différent d'une cyclodextrine ou d'un dérivé de cyclodextrine et à condition que ladite mise en contact soit réalisée en absence de tout liquide,
moyennant quoi un matériau solide de stockage de l'ozone est obtenu,
lesdits glucides et lesdits dérivés de glucides étant différents d'esters de cellulose,
lesdits dérivés de glucides étant choisis parmi les dérivés de monosaccharides, les dérivés d'oligosaccharides et les dérivés de polysaccharides,
un dérivé de monosaccharide étant un ose comprenant de 3 à 9 atomes de carbone dans lequel au moins un atome d'hydrogène et/ou au moins un radical hydroxyle et/ou la fonction carbonyle est substitué(e) par un atome d'halogène ou un groupement chimique,
un dérivé d'oligosaccharide ou de polysaccharide est un oligosaccharide ou un polysaccharide dans lequel au moins un atome d'hydrogène et/ou au moins un radical hydroxyle et/ou au moins une fonction carbonyle est substitué(e) par un atome d'halogène ou un groupement chimique, et
un dérivé de cyclodextrine étant une cyclodextrine modifiée chimiquement, réticulée, immobilisée et/ou organisée en superstructure moléculaire.

2. Procédé selon la revendication 1, **caractérisé en ce que** lesdits glucides sont choisis parmi les monosaccharides, les oligosaccharides et les polysaccharides.

3. Procédé selon la revendication 1 ou 2, **caractérisé en ce que** lesdits glucides sont choisis dans le groupe constitué par les fructanes ; les glucanes (ou dextranes) ; les galactanes telles que l'agar-agar et les carraghénanes ; les xylanes ; les mannanes ; les amyloses ; les amylopectines ; les celluloses ; les chitines ; les amidons ; les glycogènes ; les hémicelluloses ; la gomme arabique ; la gomme de guar ; les alginates ; les xanthanes ; les chitosans ; les acides hyaluroniques et les xyloglucanes.

4. Procédé selon l'une quelconque des revendications 1 à 3, **caractérisé en ce que** lesdits dérivés de glucides sont choisis dans le groupe constitué par les hydroxypropylcelluloses ; les hydroxypropylméthylcelluloses ; les hydroxypropylfructanes ; les hydroxypropylglucanes ou hydroxypropyldextranes ; les hydroxypropylgalactanes telles que l'agar-agar substitué par au moins un groupement hydroxypropyle et les carraghénanes substitués par au moins un groupement hydroxypropyle ; les hydroxypropylxylanes ; les hydroxypropylmannanes ; les hydroxypropylamyloses ; les hydroxypropylamylopectines ; les hydroxypropylchitines ; les hydroxypropylamidons ; les hydroxypropylglycogènes ; les hydroxypropylhémicelluloses ; la gomme arabique substituée par au moins un groupement hydroxypropyle ; la gomme de guar substituée par au moins un groupement hydroxypropyle; les hydroxypropylalginates ; les hydroxypropylxanthanes ; les hydroxypropylchitosans ; les acides hyaluroniques substitués par au moins un groupement hydroxypropyle et les hydroxypropylxyloglucanes.

5. Procédé selon l'une quelconque des revendications 1 à 4, **caractérisé en ce que** ledit gaz comprenant de l'ozone est un mélange gazeux comprenant de l'ozone et au moins un autre gaz tel que du dioxygène, du dioxyde de carbone, du diazote ou un de leurs mélanges.

6. Procédé selon l'une quelconque des revendications 1 à 5, **caractérisé en ce que** la mise en contact entre lesdits glucides et/ou lesdits dérivés de glucides et ledit gaz comprenant de l'ozone est réalisée à une température comprise entre 0°C et 80°C.

7. Procédé selon l'une quelconque des revendications 1 à 6, **caractérisé en ce que** la mise en contact entre lesdits glucides et/ou lesdits dérivés de glucides et ledit gaz comprenant de l'ozone dure entre 1 min et 8 h.

8. Installation susceptible d'être mise en oeuvre dans le cadre d'un procédé de préparation tel que défini à l'une quelconque des revendications 1 à 7, ladite installation comprenant au moins un réacteur contenant des glucides et/ou des dérivés de glucides tels que définis à l'une quelconque des revendications 1 à 4, sous forme solide en connexion fluidique avec une source d'un gaz comprenant de l'ozone.

9. Installation selon la revendication 8, **caractérisée en ce que** ledit réacteur est un contacteur gaz/solide, opérant en lit fixe ou fluidisé, un mélangeur de poudre ou un réacteur agité et/ou **en ce que** ladite source d'ozone est un générateur d'ozone.

10. Installation selon la revendication 8 ou 9, **caractérisée en ce qu'**elle comprend, en outre, un ou plusieurs éléments choisi(s) dans le groupe constitué par un filtre, un destructeur d'ozone, un débitmètre, des sondes de température, des analyseurs d'ozone et des vannes.

11. Matériau solide de stockage de l'ozone susceptible d'être préparé par un procédé de préparation tel que défini à l'une quelconque des revendications 1 à 7.

12. Matériau solide de stockage de l'ozone selon la revendication 11, **caractérisé en ce qu'**il comprend des glucides et/ou des dérivés de glucides se présentant sous forme solide, contenant de l'ozone et/ou de l'ozone stabilisé par réaction avec lesdits glucides et/ou dérivés de glucides ou éventuellement avec des molécules d'eau et/avec d'autres espèces présentes dans le gaz comprenant de l'ozone.

13. Matériau solide de stockage de l'ozone selon la revendication 11 ou 12, ledit matériau se présentant sous forme compactée et/ou sous forme conditionnée.

14. Utilisation d'un matériau solide de stockage de l'ozone selon l'une quelconque des revendications 11 à 13, comme agent désinfectant, dépolluant, nettoyant ou biocide.

15. Utilisation d'un matériau solide de stockage de l'ozone selon l'une quelconque des revendications 11 à 13, pour désinfecter, dépolluer ou nettoyer un fluide ou une surface.

16. Utilisation selon la revendication 15, **caractérisée en ce que** ledit fluide est choisi parmi l'air ambiant ou l'atmosphère gazeuse d'un site tel qu'une pièce domestique, une chambre froide ou un espace confiné industriel ; de l'eau de ville, de rivière, de puits, de nappe phréatique, d'étang, de lac, de piscine, d'un aquarium, de refroidissement des systèmes de climatisation ou de tours aéro-réfrigérées ; un prélèvement dans un réacteur chimique ; une eau usée domestique ; un produit notamment liquide, un effluent ou de l'eau usée provenant notamment d'élevages intensifs ou d'industries ou d'installations du domaine chimique, pharmaceutique, cosmétique, agricole, agroalimentaire, maritime, aéronautique ou spatial ; ou un de leurs mélanges.

17. Utilisation selon la revendication 15, **caractérisée en ce que** ladite surface est choisie parmi un objet industriel comme un appareil électronique ou une machine utilisée dans l'agro-alimentaire, un véhicule, une carcasse, un aéronef, une cuve, une cuisine de restaurant, une chambre froide, un sanitaire, un conteneur, une partie d'une habitation comme un toit, une façade, une terrasse, une allée, des système embarqués dans l'espace, dans des bateaux ou dans des sous-marins, des dispositifs médicaux, des tuyaux, un sol ou de la terre, du bois et une surface végétale.

18. Matériau solide de stockage de l'ozone selon l'une quelconque des revendications 11 à 13 pour utilisation comme médicament.

19. Utilisation d'un matériau solide de stockage de l'ozone selon l'une quelconque des revendications 11 à 13 comme réactif chimique.

## Patentansprüche

1. Verfahren zur Herstellung eines festen Ozonspeichermaterials, umfassend das Inkontaktbringen von Kohlenhydraten und/oder Kohlenhydratderivaten in körniger fester Form, gegebenenfalls porös, oder in kompakter fester Form, gegebenenfalls porös, mit einem Ozon umfassenden Gas,
vorausgesetzt, dass, wenn die Kohlenhydrate und/oder die Kohlenhydratderivate Cyclodextrine oder Cyclodextrinderivate umfassen, letztere mit mindestens einem anderen Kohlenhydrat als einem Cyclodextrin oder einem Cyclodextrinderivat gemischt werden und vorausgesetzt, dass der Kontakt in Abwesenheit jeglicher Flüssigkeit durchgeführt wird,
wobei ein festes Ozonspeichermaterial erhalten wird, bei dem die Kohlenhydrate und die Kohlenhydratderivate von Zelluloseestern verschieden sind,
wobei die Kohlenhydratderivate aus Monosaccharidderivaten, Oligosaccharidderivaten und Polysaccharidderivaten ausgewählt sind,
wobei ein Monosaccharidderivat eine Ose ist, umfassend 3 bis 9 Kohlenstoffatome, in der mindestens ein Wasserstoffatom und/oder mindestens ein Hydroxylrest und/oder die Carbonylfunktion durch ein Halogenatom oder eine chemische Gruppe substituiert ist,
wobei ein Oligosaccharid- oder Polysaccharidderivat ein Oligosaccharid oder ein Polysaccharid ist, in dem mindestens ein Wasserstoffatom und/oder mindestens ein Hydroxylrest und/oder mindestens eine Carbonylfunktion durch ein Halogenatom oder eine chemische Gruppe substituiert ist, und
wobei ein Cyclodextrinderivat ein chemisch modifiziertes, vernetztes, immobilisiertes und/oder molekular strukturiertes Cyclodextrin ist.

2. Verfahren nach Anspruch 1, **dadurch gekennzeichnet, dass** die Kohlenhydrate aus Monosacchariden, Oligosacchariden und Polysacchariden ausgewählt sind.

3. Verfahren nach Anspruch 1 oder 2, **dadurch gekennzeichnet, dass** die Kohlenhydrate ausgewählt sind aus der Gruppe bestehend aus Fruktanen; Glucanen (oder Dextranen); Galaktanen wie Agar-Agar und Carrageenanen; Xylanen; Mannanen; Amylosen; Amylopektinen; Zellulosen; Chitinen; Stärken; Glykogenen; Hemicellulosen; Gummi arabicum; Guar Gum; Alginaten; Xanthanen; Chitosanen; Hyaluronsäuren und Xyloglucanen.

4. Verfahren nach einem der Ansprüche 1 bis 3, **dadurch gekennzeichnet, dass** die Kohlenhydratderivate ausgewählt sind aus der Gruppe bestehend aus Hydroxypropylcellulosen; Hydroxypropylmethylcellulosen; Hydroxypropylfruktanen; Hydroxypropylglucanen oder Hydroxypropyldextranen; Hydroxypropylgalaktanen wie Agar-Agar, substituiert mit mindestens einer Hydroxypropylgruppe, und substituierten Carrageenanen; Hydroxypropylamylosen; Hydroxypropylamylopektine; Hydroxypropylchitine; Hydroxypropylamidone; Hydroxypropylglycogene; Hydroxypropylhemicellulosen; Gummi arabicum, substituiert mit mindestens einer Hydroxypropylgruppe; Guargummi, substituiert mit mindestens einer Hydroxypropylgruppe; Hydroxypropylalginate; Hydroxypropylxanthane; Hydroxypropylchitosane; Hyaluronsäuren, substituiert mit mindestens einer Hydroxypropylgruppe und Hydroxypropylxyloglucane.

5. Verfahren nach einem der Ansprüche 1 bis 4, **dadurch gekennzeichnet, dass** das Ozon umfassende Gas ein Gasgemisch ist, das Ozon und mindestens ein anderes Gas wie Sauerstoff, Kohlendioxid, Distickstoff oder eines ihrer Gemische enthält.

6. Verfahren nach einem der Ansprüche 1 bis 5, **dadurch gekennzeichnet, dass** die Kohlenhydrate und/oder die Kohlenhydratderivate mit dem Ozon umfassenden Gas bei einer Temperatur zwischen 0°C und 80°C in Kontakt gebracht werden.

7. Verfahren nach einem der Ansprüche 1 bis 6, **dadurch gekennzeichnet, dass** der Kontakt zwischen den Kohlenhydraten und/oder den Kohlenhydratderivaten und dem Ozon umfassenden Gas zwischen 1 Minute und 8 Stunden dauert.

8. Anlage, die zur Verwendung in einem Zubereitungsverfahren nach einem der Ansprüche 1 bis 7 geeignet ist, wobei die Anlage mindestens einen Reaktor enthält, der Kohlenhydrate und/oder Kohlenhydratderivate nach einem der Ansprüche 1 bis 4 in fester Form in Fluidverbindung mit einer Quelle für ein Ozon umfassendes Gas enthält.

9. Anlage nach Anspruch 8, **dadurch gekennzeichnet, dass** der Reaktor ein Gas-/Feststoffkontaktor ist, der in einem Fest- oder Fluidbett, einem Pulvermischer oder einem Rührreaktor arbeitet, und/oder dass die Ozonquelle ein Ozongenerator ist.

10. Anlage nach Anspruch 8 oder 9, **dadurch gekennzeichnet, dass** sie ferner ein oder mehrere Elemente aus der Gruppe bestehend aus einem Filter, einem Ozonzerstörer, einem Durchflussmesser, Temperatursensoren, Ozonanalysatoren und Ventilen umfasst.

11. Festes Ozonspeichermaterial, das durch ein Verfahren nach einem der Ansprüche 1 bis 7 hergestellt werden kann.

12. Festes Ozonspeichermaterial nach Anspruch 11, **dadurch gekennzeichnet, dass** es Kohlenhydrate und/oder Kohlenhydratderivate in fester Form enthält, die Ozon und/oder durch Reaktion mit den genannten Kohlenhydraten und/oder Kohlenhydratderivaten oder gegebenenfalls mit Wassermolekülen und/oder mit anderen in dem Ozon umfassenden Gas vorhandenen Spezies stabilisiertes Ozon enthalten.

13. Festes Ozonspeichermaterial nach Anspruch 11 oder 12, wobei das Material in verdichteter Form und/oder in verpackter Form vorliegt.

14. Verwendung eines festen Ozonspeichermaterials nach einem der Ansprüche 11 bis 13 als Desinfektionsmittel, Dekontaminationsmittel, Reiniger oder biozides Mittel.

15. Verwendung eines festen Ozonspeichermaterials nach einem der Ansprüche 11 bis 13 zur Desinfektion, Entgiftung oder Reinigung eines Fluids oder einer Oberfläche.

16. Verwendung nach Anspruch 15, **dadurch gekennzeichnet, dass** das Fluid ausgewählt ist aus der Umgebungsluft oder der gasförmigen Atmosphäre eines Ortes, wie einem häuslichen Raum, einer Kühlkammer oder einem geschlossenen industriellen Raum; Stadtwasser, Flusswasser, Brunnenwasser, Grundwasser, Teichwasser, Seewasser, Schwimmbadwasser, Aquarienwasser, Kühlwasser für Klimaanlagen oder Kühltürme; eine aus einem chemischen Reaktor entnommene Probe; häusliches Abwasser; ein Produkt, insbesondere eine Flüssigkeit, ein Ausfluss oder ein Abwasser aus der Intensivtierhaltung oder aus Industrien oder Anlagen der Chemie-, Pharma-, Kosmetik-, Landwirtschafts-, Nahrungsmittel-, See-, Luft- oder Raumfahrtindustrie; oder eine Mischung daraus.

17. Verwendung nach Anspruch 15, **dadurch gekennzeichnet, dass** die Oberfläche ausgewählt ist aus einem industriellen Objekt wie einer elektronischen Vorrichtung oder einer Maschine, die in der Agrar- und Nahrungsmittelindustrie verwendet wird, einem Fahrzeug, einem Korpus, einem Flugzeug, einem Tank, einer Restaurantküche, einem Kühlraum, einer Sanitäreinheit, einem Container, einem Teil einer Wohnung wie einem Dach, einer Fassade, einer Terrasse, einer Einfahrt, in den Weltraum, in Boote oder in U-Boote eingebettete Systeme, medizinische Geräte, Rohre, Boden oder Erde, Holz und eine Pflanzenoberfläche.

18. Festes Ozonspeichermaterial nach einem der Ansprüche 11 bis 13 zur Verwendung als Medikament.

19. Verwendung eines festen Ozonspeichermaterials nach einem der Ansprüche 11 bis 13 als chemisches Reagenz.

## Claims

1. A method for preparing a solid ozone storage material comprising contacting carbohydrates and/or carbohydrate derivatives in granular solid form, optionally porous or in compact solid form, optionally porous with a gas comprising ozone,
provided that, when said carbohydrates and/or said carbohydrate derivatives comprise cyclodextrins or cyclodextrin derivatives, the latter are mixed with at least one other carbohydrate different from a cyclodextrin or a cyclodextrin derivative and provided that said contacting is carried out in the absence of any liquid,
whereby a solid ozone storage material is obtained,
said carbohydrates and said carbohydrate derivatives being different from cellulose esters,
said carbohydrate derivatives being selected from the monosaccharide derivatives, the oligosaccharide derivatives and the polysaccharide derivatives,
a monosaccharide derivative being an ose comprising 3 to 9 carbon atoms in which at least one hydrogen atom and/or at least one hydroxyl radical and/or the carbonyl function is substituted by a halogen atom or a chemical group, and
an oligosaccharide or polysaccharide derivative is an oligosaccharide or polysaccharide in which at least one hydrogen atom and/or at least one hydroxyl radical and/or at least one carbonyl function is substituted by a halogen atom or a chemical group, and
a cyclodextrin derivative being a chemically modified cyclodextrin, a crosslinked cyclodextrin, a immobilized cyclodextrin and/or a cyclodextrin organized into a molecular superstructure.

2. The method according to claim 1, **characterized in that** said carbohydrates are selected from monosaccharides, oligosaccharides and polysaccharides.

3. The method according to claim 1 or 2, **characterized in that** said carbohydrates are selected from the group consisting of fructans; glucans (or dextrans); galactans such as agar-agar and carrageenans; xylans; mannans; amyloses; amylopectins; celluloses; chitins; starches; glycogens; hemicelluloses; gum arabic; guar gum; alginates; xanthans; chitosans; hyaluronic acids and xyloglucans.

4. The method according to any one of claims 1 to 3, **characterized in that** said carbohydrate derivatives are selected from the group consisting of hydroxypropyl-ceIIuloses; hydroxypropyl-methylcelluloses; hydroxypropyl-fructans; hydroxypropyl-glucans or hydroxypropyl-dextrans; hydroxypropyl-galactans such as agar-agar substituted with at least one hydroxypropyl group and carrageenans substituted with at least one hydroxypropyl group, hydroxypropyl-xylans, hydroxypropyl-mannans; hydroxypropyl-amyloses; hydroxypropyl-amylopectins; hydroxypropyl-chitins; hydroxypropyl-starches; hydroxypropyl-glycogens; hydroxypropyl-hemicelluloses; gum arabic substituted with at least one hydroxypropyl group; guar gum substituted with at least one hydroxypropyl group, hydroxypropyl-alginates, hydroxypropyl-xanthans; hydroxypropyl-chitosans; hyaluronic acids substituted with at least one hydroxypropyl group and hydroxypropyl-xyloglucans.

5. The method according to any one of claims 1 to 4, **characterized in that** said gas comprising ozone is a gas mixture comprising ozone and at least one other gas such as dioxygen, carbon dioxide, dinitrogen or a mixture thereof.

6. The method according to any one of claims 1 to 5, **characterized in that** the contact between said carbohydrates and/or said carbohydrate derivatives and said gas comprising ozone is carried out at a temperature comprised between 0°C and 80°C.

7. The method according to any one of claims 1 to 6, **characterized in that** the contact between said carbohydrates and/or said carbohydrate derivatives and said gas comprising ozone lasts between 1 min and 8 h.

8. An installation that can be used in a preparation method as defined in any one of claims 1 to 7, said installation comprising at least one reactor containing carbohydrates and/or carbohydrate derivatives as defined in any one of claims 1 to 4, in solid form in fluid connection with a source of a gas comprising ozone.

9. The installation according to claim 8, **characterized in that** said reactor is a gas/solid contactor, operating in a fixed or fluidized bed, a powder mixer or a stirred reactor and/or **in that** said ozone source is an ozone generator.

10. The installation according to claim 8 or 9, **characterized in that** it further comprises one or more elements selected from the group consisting of a filter, an ozone destructor, a flowmeter, temperature probes, ozone analyzers and valves.

11. A solid ozone storage material that can be prepared by a preparation method as defined in any one of claims 1 to 7.

12. The solid ozone storage material according to claim 11, **characterized in that** it comprises carbohydrates and/or carbohydrate derivatives in solid form, containing ozone and/or ozone stabilized by reaction with said carbohydrates and/or carbohydrate derivatives or optionally with water molecules and/with other species present in the gas comprising ozone.

13. The solid ozone storage material according to claim 11 or 12, said material being in compacted form and/or in packaged form.

14. A use of a solid ozone storage material according to any one of claims 11 to 13, as a disinfecting, depolluting, cleaning or biocidal agent.

15. A use of a solid ozone storage material according to any one of claims 11 to 13, to disinfect, depollute or clean a fluid or a surface.

16. The use according to claim 15, **characterized in that** said fluid is selected from the ambient air or the gaseous atmosphere of a site such as a domestic room, a cold room or an industrial confined space; city water, river water, well water, ground water, pond water, lake water, swimming pool water, aquarium water, cooling water from air conditioning systems or cooling towers; a sample from a chemical reactor; a domestic waste water; a product, in particular a liquid product, an effluent or waste water from in particular intensive livestock farming or from industries or facilities in the chemical, pharmaceutical, cosmetic, agricultural, agri-food, maritime, aeronautical or space sectors; or a mixture thereof.

17. The use according to claim 15, **characterized in that** said surface is selected from an industrial object such as an electronic apparatus or a machine used in the agri-food industry, a vehicle, a carcass, an aircraft, a tank, a restaurant kitchen, a cold room, a sanitary facility, a container, a part of a dwelling such as a roof, a facade, a terrace, a driveway, systems embedded in space, in ships or in submarines, medical devices, pipes, soil or earth, wood and a plant surface.

18. The solid ozone storage material according to any one of claims 11 to 13, for use as a medicine.

19. The use of a solid ozone storage material according to any one of claims 11 to 13 as a chemical reagent.
